# EUROPÄISCHE PATENTSCHRIFT

(11) **EP 4 237 243 B1**
(45) Veröffentlichungstag und Bekanntmachung des Hinweises auf die Patenterteilung: **30.09.2026**
(21) Anmeldenummer: 21786987.4
(22) Anmeldetag: 13.10.2021
(51) Int. Cl.: B32B 17/10, B60J 1/02, C03C 17/36, G02B 27/01

(54) **PROJEKTIONSANORDNUNG FÜR EIN HEAD-UP-DISPLAY (HUD) MIT P-POLARISIERTER STRAHLUNG**
PROJECTION ASSEMBLY FOR A HEAD-UP DISPLAY (HUD) WITH P-POLARIZED RADIATION
DISPOSITIF DE PROJECTION POUR UN AFFICHAGE TÊTE HAUTE (HUD) À RAYONNEMENT P-POLARISÉ

(30) Priorität: 29.10.2020 EP 20204532
(43) Veröffentlichungstag der Anmeldung: 06.09.2023
(73) Patentinhaber: Saint-Gobain Sekurit France, 60150 Thourotte (FR)
(72) Erfinder: SCHMADTKE, Lisa, 52146 Würselen (DE); GILLESSEN, Stephan, 52477 Alsdorf (DE); DO ROSARIO, Jefferson, 52064 Aachen (DE); HAGEN, Jan, 53123 Bonn (DE)
(74) Vertreter: Gebauer, Dieter Edmund
(86) Internationale Anmeldenummer: PCT/EP2021/078276
(87) Internationale Veröffentlichungsnummer: WO 2022/089939

(56) Entgegenhaltungen:
- EP-A2- 3 187 917

## Beschreibung

Die Erfindung betrifft eine Projektionsanordnung für ein Head-Up-Display.

Moderne Automobile werden in zunehmendem Maße mit sogenannten Head-Up-Displays (HUDs) ausgestattet. Mit einem Projektor, typischerweise im Bereich des Armaturenbretts, werden Bilder auf die Windschutzscheibe projiziert, dort reflektiert und vom Fahrer als virtuelles Bild (von ihm aus gesehen) hinter der Windschutzscheibe wahrgenommen. So können wichtige Informationen in das Blickfeld des Fahrers projiziert werden, beispielsweise die aktuelle Fahrtgeschwindigkeit, Navigations- oder Warnhinweise, die der Fahrer wahrnehmen kann, ohne seinen Blick von der Fahrbahn wenden zu müssen. Head-Up-Displays können so wesentlich zur Steigerung der Verkehrssicherheit beitragen.

HUD-Projektoren werden überwiegend mit s-polarisierter Strahlung betrieben und bestrahlen die Windschutzscheibe mit einem Einfallswinkel von etwa 65%, was nahe dem Brewster-Winkel für einen Luft-Glas-Übergang liegt (56,5° für Kalk-Natron-Glas). Dabei tritt das Problem auf, dass das Projektorbild an beiden externen Oberflächen der Windschutzscheibe reflektiert wird. Dadurch tritt neben dem gewünschten Hauptbild auch ein leicht versetztes Nebenbild auf, das sogenannte Geisterbild ("Ghost"). Das Problem wird üblicherweise dadurch gemindert, dass die Oberflächen in einem Winkel zueinander eingeordnet werden, insbesondere durch Verwendung einer keilartigen Zwischenschicht zur Lamination der als Verbundscheibe ausgebildeten Windschutzscheiben, so dass Hauptbild und Geisterbild einander überlagert werden. Verbundgläser mit Keilfolien für HUDs sind beispielsweise aus WO2009/071135A1, EP1800855B1 oder EP1880243A2 bekannt.

Die Keilfolien sind kostspielig, sodass die Herstellung einer solchen Verbundscheibe für ein HUD recht kostenintensiv ist. Es besteht daher Bedarf an HUD-Projektionsanordnungen, die mit Windschutzscheiben ohne Keilfolien auskommen. So ist es beispielsweise möglich, den HUD-Projektor mit p-polarisierter Strahlung zu betreiben, welche an den Scheibenoberflächen nicht wesentlich reflektiert wird. Als Reflexionsfläche für die p-polarisierte Strahlung weist die Windschutzscheibe stattdessen eine Reflexionsbeschichtung auf. Die EP3187917A2 offenbart eine solche HUD-Projektionsanordnung, welche mit p-polarisierter Strahlung betrieben wird. Als reflektierende Struktur wird unter anderem eine einzelne metallische Schicht vorgeschlagen, die zwischen zwei dielektrischen Schichten eingebettet ist, wobei die metallische Schicht zwischen den beiden Einzelscheiben der Windschutzscheibe angeordnet ist. In einer Ausführungsform ist die reflektierende Struktur auf der zur thermoplastischen Zwischenschicht weisenden Innenseite der Außenscheibe angeordnet, und wird durch eine auf einer polymeren Trägerfolie angeordnete reflektierende Struktur ergänzt. Alternativ kann die metallische Schicht auch in Kombination mit einer Polymerschicht auf einer außenliegenden Seite der Windschutzscheibe angeordnet sein.

Es besteht Bedarf an Windschutzscheiben, die zusätzlich zu der Funktion als Reflexionsfläche für die p-polarisierte Strahlung weitere Funktionen haben. Besondere Bedeutung haben hier heizbare Beschichtungen oder IR-Strahlung reflektierende Beschichtungen. Es ist möglich, die Reflexionsbeschichtung selbst als heizbare Beschichtung zu nutzen, wie zum Beispiel in CN 106526854 offenbart ist. Es ist jedoch schwierig, beide Funktionen in einer Beschichtung zu vereinen.

CN 106630688 offenbart eine Verbundscheibe mit einer Reflexionsbeschichtung für p-polarisierte Strahlung auf der zum Fahrzeuginnenraum weisenden Seite der Innenscheibe und einer Low-e-Beschichtung auf der zur thermoplastischen Zwischenschicht weisenden Seite der Außenscheibe. Ein Nachteil dieser Konfiguration ist, dass die Reflexionsbeschichtung für p-polarisierte Strahlung freiliegt und durch zusätzliche Beschichtungen vor mechanischer Beschädigung geschützt werden muss.

Es besteht Bedarf an Projektionsanordnungen für HUDs mit Reflexionsbeschichtungen, die eine hohe Transmission im sichtbaren Spektralbereich gewährleisten sowie eine hohe Reflektivität gegenüber p-polarisierter Strahlung aufweisen und gleichzeitig einen verbesserten thermischen Komfort bieten. Der vorliegenden Erfindung liegt die Aufgabe zugrunde, eine solche verbesserte Projektionsanordnung bereitzustellen.

Die Aufgabe der vorliegenden Erfindung wird erfindungsgemäß durch eine Projektionsanordnung gemäß Anspruch 1 gelöst. Bevorzugte Ausführungen gehen aus den Unteransprüchen hervor.

Erfindungsgemäß wird p-polarisierte Strahlung zur Erzeugung des HUD-Bildes verwendet und die Verbundscheibe weist eine Reflexionsbeschichtung auf, welche p-polarisierte Strahlung hinreichend reflektiert. Da der für HUD-Projektionsanordnungen typische Einfallswinkel von etwa 65° dem Brewsterwinkel für einen Luft-Glas-Übergang (56,5°, Kalk-Natron-Glas) relativ nahekommt, wird p-polarisierte Strahlung von den Scheibenoberflächen kaum reflektiert, sondern hauptsächlich von der leitfähigen Beschichtung. Geisterbilder treten daher nicht oder kaum wahrnehmbar auf, sodass auf die Verwendung einer kostspieligen Keilfolie verzichtet werden kann. Außerdem ist das HUD-Bild auch für Träger von polarisationsselektiven Sonnenbrillen erkennbar, welche typischerweise nur p-polarisierte Strahlung passieren lassen und s-polarisierte Strahlung blocken. Die erfindungsgemäße Reflexionsbeschichtung bewirkt eine hohe Reflektivität gegenüber p-polarisierter Strahlung im Spektralbereich von 450 nm bis 650 nm, der für HUD-Darstellungen relevant ist (HUD-Projektoren arbeiten typischerweise mit den Wellenlängen 473 nm, 550 nm und 630 nm (RGB)). Dadurch wird ein intensitätsstarkes HUD-Bild erreicht. Die einzelne Silberschicht setzt die Lichttransmission nicht übermäßig herab, so dass die Scheibe weiterhin als Windschutzscheibe verwendet werden kann. Die Funktionsbeschichtung sorgt für eine deutliche Verbesserung der Sonnenschutzfunktion der Scheibe, indem sie die Infrarot (IR)-Strahlung der Sonne reflektiert. Gleichzeitig ist die Funktionsbeschichtung aufgrund der Anordnung innerhalb der Windschutzscheibe vor mechanischer Beschädigung geschützt. Die gleiche Schutzwirkung wird für die Reflexionsbeschichtung erzielt, da diese ebenfalls im Inneren der Windschutzscheibe angeordnet ist. Die Anordnung der Reflexionsbeschichtung zwischen der Innenscheibe und der Funktionsbeschichtung sorgt dafür, dass die p-polarisierte Strahlung des Projektors hauptsächlich von der Reflexionsbeschichtung reflektiert wird, um dann beim Betrachter ein deutliches HUD-Bild zu erzeugen. So kommt es nicht zu störenden Reflexionen an den elektrisch leitfähigen Schichten der Funktionsbeschichtung.

Die erfindungsgemäße Projektionsanordnung für ein Head-Up-Display (HUD) umfasst mindestens eine Windschutzscheibe, die mit einer Reflexionsbeschichtung versehen ist, und einen Projektor. Wie bei HUDs üblich bestrahlt der Projektor einen Bereich der Windschutzscheibe, wo die Strahlung in Richtung des Betrachters (Fahrers) reflektiert wird, wodurch ein virtuelles Bild erzeugt wird, welches der Betrachter von ihm aus gesehen hinter der Windschutzscheibe wahrnimmt. Der durch den Projektor bestrahlbare Bereich der Windschutzscheibe wird als HUD-Bereich bezeichnet. Die Strahlrichtung des Projektors kann typischerweise durch Spiegel variiert werden, insbesondere vertikal, um die Projektion an die Körpergröße des Betrachters anzupassen. Der Bereich, in dem sich die Augen des Betrachters bei gegebener Spiegelstellung befinden müssen, wird als Eyeboxfenster bezeichnet. Dieses Eyeboxfenster kann durch Verstellung der Spiegel vertikal verschoben werden, wobei der gesamte dadurch zugängliche Bereich (das heißt die Überlagerung aller möglichen Eyeboxfenster) als Eyebox bezeichnet wird. Ein innerhalb der Eyebox befindlicher Betrachter kann das virtuelle Bild wahrnehmen. Damit ist natürlich gemeint, dass sich die Augen des Betrachters innerhalb der Eyebox befinden müssen, nicht etwa der gesamte Körper.

Die hier verwendeten Fachbegriffe aus dem Bereich der HUDs sind dem Fachmann allgemein bekannt. Für eine ausführliche Darstellung sei auf die Dissertation "Simulationsbasierte Messtechnik zur Prüfung von Head-Up Displays" von Alexander Neumann am Institut für Informatik der Technischen Universität München (München: Universitätsbibliothek der TU München, 2012) verwiesen, insbesondere auf Kapitel 2 "Das Head-Up Display".

Die Windschutzscheibe umfasst eine Außenscheibe und eine Innenscheibe, die über eine thermoplastische Zwischenschicht miteinander verbunden sind. Die Windschutzscheibe ist dafür vorgesehen, in einer Fensteröffnung eines Fahrzeugs den Innenraum gegenüber der äußeren Umgebung abzutrennen. Mit Innenscheibe wird im Sinne der Erfindung die dem Fahrzeuginnenraum zugewandte Scheibe der Windschutzscheibe bezeichnet. Mit Außenscheibe wird die der äußeren Umgebung zugewandte Scheibe bezeichnet. Die Windschutzscheibe ist bevorzugt die Windschutzscheibe eines Kraftfahrzeugs, insbesondere eines Personen- oder Lastkraftwagens.

Die Windschutzscheibe weist eine Oberkante und eine Unterkante auf sowie zwei dazwischen verlaufende Seitenkanten. Mit Oberkante wird diejenige Kante bezeichnet, welche dafür vorgesehen ist, in Einbaulage nach oben zu weisen. Mit Unterkante wird diejenige Kante bezeichnet, welche dafür vorgesehen ist, in Einbaulage nach unten zu weisen. Die Oberkante wird häufig auch als Dachkante und die Unterkante als Motorkante bezeichnet.

Die Außenscheibe und die Innenscheibe weisen jeweils eine außenseitige Oberfläche (Außenseite) und eine innenraumseitige Oberfläche (Innenseite) auf und eine dazwischen verlaufende, umlaufende Seitenkante. Mit außenseitiger Oberfläche oder Außenseite wird im Sinne der Erfindung diejenige Hauptfläche bezeichnet, welche dafür vorgesehen ist, in Einbaulage der äußeren Umgebung zugewandt zu sein. Mit innenraumseitiger Oberfläche oder Innenseite wird im Sinne der Erfindung diejenige Hauptfläche bezeichnet, welche dafür vorgesehen ist, in Einbaulage dem Innenraum zugewandt zu sein. Die innenraumseitige Oberfläche bzw. die Innenseite der Außenscheibe und die außenseitige Oberfläche bzw. die Außenseite der Innenscheibe sind einander zugewandt und durch die thermoplastische Zwischenschicht miteinander verbunden.

Der Projektor ist auf den HUD-Bereich der Windschutzscheibe gerichtet. Die Strahlung des Projektors ist überwiegend p-polarisiert. Die Reflexionsbeschichtung ist geeignet, p-polarisierte Strahlung zu reflektieren. Dadurch wird aus der Projektorstrahlung ein virtuelles Bild erzeugt, welches der Fahrer des Fahrzeugs von ihm aus gesehen hinter der Windschutzscheibe wahrnehmen kann.

Die erfindungsgemäße Reflexionsbeschichtung weist genau eine elektrisch leitfähige Schicht auf Basis von Silber auf. Unterhalb der elektrisch leitfähigen Schicht ist ein unterer dielektrischer Schichtaufbau angeordnet. Der untere dielektrische Schichtaufbau kann aus einer einzigen dielektrischen Schicht bestehen oder eine Schichtenfolge aus mehreren Schichten umfassen. Ebenso ist oberhalb der elektrisch leitfähigen Schicht ein oberer dielektrischer Schichtaufbau angeordnet. Der obere dielektrische Schichtaufbau kann aus einer einzigen dielektrischen Schicht bestehen oder eine Schichtenfolge aus mehreren dielektrischen Schichten umfassen. Der obere und der untere dielektrische Schichtaufbau weisen jeweils einen Brechungsindex auf, der mindestens 1,9 beträgt.

Brechungsindizes sind im Rahmen der vorliegenden Erfindung grundsätzlich bezogen auf eine Wellenlänge von 550 nm angegeben. Der Brechungsindex kann beispielsweise mittels Ellipsometrie bestimmt werden. Ellipsometer sind kommerziell erhältlich, beispielsweise von der Firma Sentech. Der Brechungsindex einer oberen oder unteren dielektrischen Schicht wird vorzugsweise bestimmt, indem diese zunächst als einzelne Schicht auf einem Substrat abgeschieden wird und anschließend der Brechungsindex mittels Ellipsometrie gemessen wird. Zur Bestimmung des Brechungsindex einer oberen oder unteren dielektrischen Schichtenfolge werden die Schichten der Schichtenfolge jeweils alleine als Einzelschichten auf einem Substrat abgeschieden und anschließend der Brechungsindex mittels Ellipsometrie bestimmt. Für jede dieser Einzelschichten ist dabei erfindungsgemäß ein Brechungsindex von mindestens 1,9 zu erreichen. Im Falle einer Schichtenfolge mit Brechungsindex von mindestens 1,9 haben somit alle einzelnen Schichten einen Brechungsindex von mindestens 1,9. Dielektrische Schichten mit einem Brechungsindex von mindestens 1,9 sowie Verfahren zu deren Abscheidung sind dem Fachmann auf dem Gebiet der Dünnschichten bekannt. Bevorzugt werden Methoden der physikalischen Gasphasenabscheidung, insbesondere Magnetronsputtern eingesetzt. Die optische Dicke ist das Produkt aus der geometrischen Dicke und dem Brechungsindex (bei 550 nm). Die optische Dicke einer Schichtenfolge berechnet sich als Summe der optischen Dicken der Einzelschichten.

Ist eine erste Schicht (oder Schichtenfolge, Schichtmodul oder Schichtaufbau) oberhalb einer zweiten Schicht angeordnet, so bedeutet dies im Sinne der Erfindung, dass die erste Schicht weiter von dem Substrat, auf dem die Beschichtung aufgebracht ist, entfernt angeordnet ist als die zweite Schicht. Ist eine erste Schicht unterhalb einer zweiten Schicht angeordnet, so bedeutet dies im Sinne der Erfindung, dass die zweite Schicht weiter vom Substrat entfernt angeordnet ist als die erste Schicht.

Ist eine Schicht auf Basis eines Materials ausgebildet, so besteht die Schicht mehrheitlich aus diesem Material, insbesondere im Wesentlichen aus diesem Material neben etwaigen Verunreinigungen oder Dotierungen.

Die Reflexionsbeschichtung ist transparent, was im Sinne der Erfindung bedeutet, dass sie eine mittlere Transmission im sichtbaren Spektralbereich von mindestens 70 %, bevorzugt mindestens 80 % aufweist und dadurch die Durchsicht durch die Scheibe nicht wesentlich einschränkt. Grundsätzlich ist es ausreichend, wenn der HUD-Bereich der Windschutzscheibe mit der Reflexionsbeschichtung versehen ist. Es können aber auch weitere Bereiche mit der Reflexionsbeschichtung versehen sein und die Windschutzscheibe kann im wesentlichen vollflächig mit der Reflexionsbeschichtung versehen sein, was herstellungsbedingt bevorzugt sein kann. In einer Ausgestaltung der Erfindung sind mindestens 80% der Scheibenoberfläche mit der erfindungsgemäßen Reflexionsbeschichtung versehen. Insbesondere ist die Reflexionsbeschichtung vollflächig auf die Scheibenoberfläche aufgebracht mit Ausnahme eines umlaufenden Randbereichs und optional lokaler Bereiche, die als Kommunikations-, Sensor- oder Kamerafenster die Transmission von elektromagnetischer Strahlung durch die Windschutzscheibe gewährleisten sollen und daher nicht mit der Reflexionsbeschichtung versehen sind. Der umlaufende unbeschichtete Randbereich weist beispielsweise eine Breite von bis zu 20 cm auf. Er verhindert den direkten Kontakt der Reflexionsbeschichtung zur umgebenden Atmosphäre, so dass die Reflexionsbeschichtung im Innern der Windschutzscheibe vor Korrosion und Beschädigung geschützt ist.

Die Funktionsbeschichtung weist IR-reflektierende Eigenschaften auf, so dass sie als Sonnenschutzbeschichtung fungiert, welche die Aufheizung des Fahrzeuginnenraums durch Reflexion der Wärmestrahlung verringert. Der TTS-Wert der mit der Beschichtung versehenen Verbundscheibe beträgt dabei bevorzugt kleiner 60%, besonders bevorzugt kleiner 55%. Mit TTS-Wert wird die insgesamt eingestrahlte Sonnenenergie, gemessen nach ISO 13837, bezeichnet - er ist ein Maß für den thermischen Komfort. Die Beschichtung kann auch als Heizbeschichtung verwendet werden, wenn sie elektrisch kontaktiert wird, so dass ein Strom durch sie fließt, welcher die Beschichtung erwärmt. Der Flächenwiderstand der Beschichtung beträgt bevorzugt kleiner als 4 Ω/Quadrat, insbesondere kleiner 3 Ω /Quadrat.

Gemäß einer ersten Alternative der Erfindung ist die Reflexionsbeschichtung, bevorzugt direkt, auf der der thermoplastischen Zwischenschicht zugewandten Oberfläche der Innenscheibe, also der außenseitigen Oberfläche (der Außenseite) der Innenscheibe, angeordnet. Die Anordnung direkt auf der Außenseite der Innenscheibe an Stelle der Anbringung über eine Trägerfolie hat den Vorteil, dass es keinerlei optische Beeinträchtigungen durch eine Trägerfolie gibt. Eine optisch einwandfreie Anordnung ist von besonderer Bedeutung für die spätere Nutzung in der HUD-Projektionsanordnung. Bevorzugt ist die Reflexionsbeschichtung durch physikalische Gasphasenabscheidung aufgebracht. Dies liefert besonders gute Beschichtungen und ist industriell gut umsetzbar.

Die Funktionsbeschichtung ist bevorzugt direkt auf der zur thermoplastischen Zwischenschicht weisenden Innenseite der Außenscheibe angeordnet. Die Anordnung auf der Innenseite der Außenscheibe verhindert ein zu starkes Aufheizen der Scheibe. Besonders bevorzugt ist die Funktionsbeschichtung über physikalische Gasphasenabscheidung auf die Außenscheibe aufgebracht. Dies liefert besonders gute Beschichtungen und ist industriell gut umsetzbar.

In einer bevorzugten Ausführungsform ist die Funktionsbeschichtung direkt auf der Innenseite der Außenscheibe angeordnet und die Reflexionsbeschichtung direkt auf der Außenseite der Innenscheibe angeordnet. Dies ist industriell besonders leicht herzustellen, da keine separate Trägerfolie eingelegt werden muss. Zudem werden optische Fehler vermieden, die während des Laminierens der Windschutzscheibe entstehen.

In einer anderen bevorzugten Ausführungsform ist die Reflexionsbeschichtung direkt auf der Innenscheibe angeordnet und die Funktionsbeschichtung auf einer Trägerfolie in die thermoplastische Zwischenschicht eingebettet. Somit werden optische Beeinträchtigungen durch Trägerfolie oder thermoplastische Zwischenschicht bei der Erzeugung des HUD-Bilds vermieden.

Gemäß einer zweiten Alternative der Erfindung sind die Funktionsbeschichtung und die Reflexionsbeschichtung auf einer einzigen polymeren Trägerfolie angeordnet, die in die thermoplastische Zwischenschicht eingebettet ist, und die auf der einen Seite die Funktionsbeschichtung enthält und auf der anderen Seite die Reflexionsbeschichtung. Dies ist verfahrenstechnisch vorteilhaft, weil nur eine einzige Folie mit einlaminiert werden muss. Zudem wird in diesem Fall der Abstand zwischen der Reflexionsbeschichtung und der Funktionsbeschichtung nur durch die Dicke der polymeren Trägerfolie bestimmt. Wenn es zu Reflexionen der p-polarisierten Strahlung an der Funktionsbeschichtung kommt, überlagert sich das dadurch erzeugt Bild mit der Reflexion an der Reflexionsbeschichtung, sodass keine zwei getrennten HUD-Bilder wahrgenommen werden. So werden störende Geisterbilder effizient unterdrückt.

Die Trägerfolie besteht bevorzugt im Wesentlichen aus Polyethylentherephthalat (PET).

Die Dicke der Trägerfolie beträgt bevorzugt zwischen 30 µm und 400 µm, weiterhin bevorzugt zwischen 40 µm und 200 µm, besonders bevorzugt zwischen 50 µm und 150 µm, beispielsweise 100 µm. Bei einer beidseitig beschichteten Trägerfolie ist dies besonders vorteilhaft, da sich Doppelbilder, die durch Reflexion an der Funktionsbeschichtung entstehen und die HUD-Bilder zu einem einzigen Bild überlagern, sodass keine störenden Doppelbilder wahrgenommen werden.

In einer bevorzugten Ausführungsform umfasst die Funktionsbeschichtung mindestens eine elektrisch leitfähige Schicht auf Basis von Silber. Die geometrische Dicke der elektrisch leitfähigen Schicht in der Funktionsbeschichtung ist kleiner als die geometrische Dicke der elektrisch leitfähigen Schicht auf Basis von Silber in der Reflexionsbeschichtung. Durch die geringere geometrische Dicke der elektrisch leitfähigen Schicht auf Basis von Silber in der Funktionsbeschichtung, die geringer ist als die Dicke der elektrisch leitfähigen Schicht in der Reflexionsbeschichtung wird eine hohe Transmission der Windschutzscheibe sichergestellt und eine Erzeugung eines deutlichen HUD-Bildes erzielt.

Bevorzugt beträgt der Unterschied 1 nm bis 10 nm, bevorzugt 2 nm bis 6 nm, besonders bevorzugt 3 nm bis 4 nm. Bei mehreren elektrisch leitfähigen Schichten in der Funktionsbeschichtung bezieht sich der Unterschied jeweils auf den Unterschied zwischen einer einzelnen Schicht der Funktionsbeschichtung zu der Schicht in der Reflexionsbeschichtung. Aufgrund der geringeren Dicke der elektrisch leitfähigen Schichten in der Funktionsbeschichtung kann eine ausreichende Transmission der Windschutzscheibe sichergestellt werden. Zudem sind durch die Funktionsschicht verursachte schwache Doppelbilder nur gering ausgeprägt.

Die Funktionsbeschichtung umfasst bevorzugt mindestens eine elektrisch leitfähige Schicht auf Basis von Silber. Unterhalb der elektrisch leitfähigen Schicht ist ein unterstes dielektrisches Schichtmodul angeordnet. Das unterste dielektrische Schichtmodul kann aus einer einzigen dielektrischen Schicht bestehen oder eine Schichtenfolge aus mehreren Schichten umfassen. Ebenso ist oberhalb der elektrisch leitfähigen Schicht ein oberstes dielektrisches Schichtmodul angeordnet. Das oberste dielektrische Schichtmodul kann aus einer einzigen dielektrischen Schicht bestehen oder eine Schichtenfolge aus mehreren dielektrischen Schichten umfassen. Das oberste und das unterste dielektrische Schichtmodul weisen jeweils einen Brechungsindex auf, der mindestens 1,9 beträgt. Die Begriffe oberstes und unterstes Schichtmodul bedeuten, dass oberhalb des obersten Schichtmodul kein weiteres dielektrisches Schichtmodul angeordnet ist beziehungsweise, dass unterhalb des untersten dielektrischen Schichtmoduls kein weiteres dielektrisches Schichtmodul in der Funktionsbeschichtung angeordnet ist.

Die Funktionsbeschichtung weist bevorzugt aufgrund von elektrisch leitfähigen Silberschicht/en IR-reflektierende Eigenschaften auf, sodass sie als Sonnenschutzbeschichtung fungiert, welche die Aufheizung des Fahrzeuginnenraums durch Reflexion der Wärmestrahlung verringert. Die Funktionsbeschichtung wird bevorzugt auch als Heizbeschichtung verwendet, indem sie elektrisch kontaktiert wird, sodass ein Strom durch sie fließt, welcher die Funktionsbeschichtung erwärmt. Dabei wird die Funktionsbeschichtung über elektrische Sammelleiter mit einer Spannungsquelle verbunden und ist durch Anlegen einer Spannung beheizbar.

Die Funktionsbeschichtung ist transparent, was im Sinne der Erfindung bedeutet, dass sie eine mittlere Transmission im sichtbaren Spektralbereich von mindestens 70 %, bevorzugt mindestens 80 % aufweist und dadurch die Durchsicht durch die Scheibe nicht wesentlich einschränkt. Die Windschutzscheibe ist bevorzugt im wesentlichen vollflächig mit der Funktionsbeschichtung versehen. Somit wird eine vollflächige Sonnenschutzfunktion erhalten, was herstellungsbedingt bevorzugt ist. In einer Ausgestaltung der Erfindung sind mindestens 80% der Scheibenoberfläche mit der Funktionsbeschichtung versehen. Besonders bevorzugt ist die Funktionsbeschichtung vollflächig auf die Scheibenoberfläche aufgebracht, mit Ausnahme eines umlaufenden Randbereichs und optional lokaler Bereich, die als Kommunikations-, Sensor- oder Kamerafenster die Transmission von elektromagnetischer Strahlung durch die Windschutzscheibe gewährleisten sollen und daher nicht mit der Funktionsbeschichtung versehen sind. Der umlaufende unbeschichtete Randbereich weist beispielsweise eine Breite von bis zu 20 cm auf. Er verhindert den direkten Kontakt der Funktionsbeschichtung zur umgebenden Atmosphäre, sodass die Funktionsbeschichtung im Innern der Windschutzscheibe vor Korrosion und Beschädigung geschützt ist.

In einer bevorzugten Ausführungsform beträgt in der Reflexionsbeschichtung das Verhältnis der optischen Dicke des oberen dielektrischen Schichtaufbaus zur optischen Dicke des unteren dielektrischen Schichtaufbaus mindestens 1,6. Es hat sich überraschend gezeigt, dass diese Asymmetrie der optischen Dicken zu einem deutlich glatteren Reflexionsspektrum gegenüber p-polarisierter Strahlung führt, sodass über den gesamten relevanten Spektralbereich (400 nm bis 680 nm) ein relativ konstanter Reflexionsgrad vorliegt. Dadurch wird eine farbneutrale Darstellung der HUD-Projektion gewährleistet. Besonders bevorzugt beträgt das Verhältnis der optischen Dicke des oberen dielektrischen Schichtaufbaus zur optischen Dicke des unteren dielektrischen Schichtaufbaus mindestens 1,7, besonders bevorzugt mindestens 1,8. Damit werden besonders gute Ergebnisse erzielt.

Das Verhältnis der optischen Dicken berechnet sich als Quotient aus der optischen Dicke des oberen dielektrischen Schichtaufbaus (Dividend) geteilt durch die optische Dicke des unteren dielektrischen Schichtaufbaus (Divisor).

In einer bevorzugten Ausführungsform beträgt in der Funktionsbeschichtung das Verhältnis der optischen Dicke des obersten dielektrischen Schichtmoduls zur optischen Dicke des untersten dielektrischen Schichtmoduls zwischen 0,8 und 2. Es hat sich überraschend gezeigt, dass dieses Verhältnis zu besonders hohen Transmissionswerten für die Windschutzscheibe führt. Bevorzugt beträgt das Verhältnis der optischen Dicke des obersten dielektrischen Schichtmoduls zur optischen Dicke des untersten dielektrischen Schichtmoduls zwischen 0,8 und 1,5, besonders bevorzugt zwischen 0,9 und 1,2 und insbesondere etwa 1,0. Damit werden besonders gute Transmissionseigenschaften erzielt.

Das Verhältnis der optischen Dicken berechnet sich als Quotient aus der optischen Dicke des obersten dielektrischen Schichtmoduls (Dividend) geteilt durch die optische Dicke des untersten dielektrischen Schichtmoduls (Divisor).

In einer bevorzugten Ausführungsform enthält die Funktionsbeschichtung zwei elektrisch leitfähige Schichten auf Basis von Silber und dazwischen ein mittleres dielektrisches Schichtmodul. Dadurch werden die IR-reflektierenden Eigenschaften verbessert, sodass eine verbesserte Wärmeschutzwirkung erzielt wird. Das mittlere dielektrische Schichtmodul ist zwischen den zwei leitfähigen Schichten auf Basis von Silber angeordnet, sodass die Funktionsbeschichtung die folgenden Schichten in dieser Reihenfolge enthält: unterstes dielektrisches Schichtmodul - erste leitfähige Schicht auf Basis von Silber - mittleres dielektrisches Schichtmodul - zweite leitfähige Schicht auf Basis von Silber - oberstes dielektrisches Schichtmodul. Es können weitere Schichten im Schichtstapel enthalten sein.

Bevorzugt ist in der Funktionsbeschichtung das Verhältnis der optischen Dicke des mittleren dielektrischen Schichtmoduls zur optischen Dicke des untersten dielektrischen Schichtmoduls und zur optischen Dicke des obersten dielektrischen Schichtmoduls größer als 1,9, besonders bevorzugt größer als 2,0 und insbesondere bevorzugt größer als 2,1. Die Erfinder haben festgestellt, dass dieses Verhältnis zu überraschend hohen Werten in der Transmission der Windschutzscheibe führt trotz der erhöhten Anzahl der Silberschichten. Bevorzugt ist das Verhältnis nicht größer als 3,0. Dies betrifft somit die folgenden Verhältnisse optischer Dicken: mittleres dielektrisches Schichtmodul / unterstes dielektrisches Schichtmodul, mittleres dielektrisches Schichtmodul / oberstes dielektrisches Schichtmodul,

Bevorzugt ist in der Funktionsbeschichtung das Verhältnis der optischen Dicke des obersten dielektrischen Schichtmoduls zur optischen Dicke des untersten dielektrischen Schichtmoduls zwischen 0,9 und 1,1, bevorzugt etwa 1, und das Verhältnis der optischen Dicke des mittleren dielektrischen Schichtmoduls zur optischen Dicke des untersten dielektrischen Schichtmoduls und zur optischen Dicke des obersten dielektrischen Schichtmoduls größer als 1,9, besonders bevorzugt größer als 2,0 und insbesondere bevorzugt größer als 2,1. Diese Kombination führt zu besonders guten Ergebnissen.

In einer weiteren bevorzugten Ausführungsform enthält die Funktionsbeschichtung drei elektrisch leitfähige Schichten auf Basis von Silber und zwei mittlere dielektrische Schichtmodule, die zwischen den drei elektrisch leitfähigen Schichten auf Basis von Silber angeordnet sind. Dadurch werden die IR-reflektierenden Eigenschaften weiter verbessert, sodass eine erhöhte Wärmeschutzwirkung erreicht wird. Die zwei mittleren dielektrischen Schichtmodule sind so angeordnet, dass jeweils zwischen zwei Silberschichten ein mittleres dielektrisches Schichtmodul angeordnet ist. Somit enthält die Funktionsbeschichtung die folgenden Schichten in dieser Reihenfolge: unterstes dielektrisches Schichtmodul - erste leitfähige Schicht auf Basis von Silber - mittleres dielektrisches Schichtmodul - zweite leitfähige Schicht auf Basis von Silber - mittleres dielektrisches Schichtmodul -dritte leitfähige Schicht auf Basis von Silber - oberstes dielektrisches Schichtmodul. Es können auch weitere Schichtstapel im Schichtstapel enthalten sein. Es ist auch die Anwesenheit von mehr als drei elektrisch leitfähigen Schichten auf Basis von Silber möglich, wobei in diesem Fall weitere mittlere dielektrische Schichtmodule hinzugefügt werden, sodass die Silberschichten jeweils durch ein dielektrisches Schichtmodul voneinander isoliert werden.

Bevorzugt sind in der Funktionsbeschichtung die Verhältnisse der optischen Dicke der beiden mittleren dielektrischen Schichtmodule zu der optischen Dicke des untersten dielektrischen Schichtmoduls und der optischen Dicke des obersten dielektrischen Schichtmoduls größer als 1,9, bevorzugt größer als 2,0 besonders bevorzugt größer als 2,1. Dies betrifft somit die folgenden Verhältnisse optischer Dicken:
erstes mittleres dielektrisches Schichtmodul / unterstes dielektrisches Schichtmodul,
zweites mittleres dielektrisches Schichtmodul / unterstes dielektrisches Schichtmodul,
erstes mittleres dielektrisches Schichtmodul / oberstes dielektrisches Schichtmodul,
zweites mittleres dielektrisches Schichtmodul / oberstes dielektrisches Schichtmodul.

Bevorzugt ist dabei in der Funktionsbeschichtung das Verhältnis der optischen Dicke des obersten dielektrischen Schichtmoduls zur optischen Dicke des untersten dielektrischen Schichtmoduls zwischen 0,9 und 1,1, bevorzugt etwa 1, und das Verhältnis der optischen Dicke des mittleren dielektrischen Schichtmoduls zur optischen Dicke des untersten dielektrischen Schichtmoduls und zur optischen Dicke des obersten dielektrischen Schichtmoduls größer als 1,9, besonders bevorzugt größer als 2,0 und insbesondere bevorzugt größer als 2,1. Diese Kombination führt zu besonders guten Ergebnissen.

In einer weiteren bevorzugten Ausführungsform enthält die Funktionsbeschichtung mindestens zwei, bevorzugt genau zwei, genau drei oder genau vier elektrisch leitfähige Schichten auf Basis von Silber, wobei jede elektrisch leitfähige Schicht auf Basis von Silber in der Funktionsbeschichtung eine dünnere geometrische Dicke aufweist als die elektrisch leitfähige Schicht auf Basis von Silber in der Reflexionsbeschichtung. Dies führt zu einer verbesserten Wärmeschutzwirkung der Windschutzscheibe bei gleichzeitig hoher Transmission, wobei keine störenden Geisterbilder durch Reflexion an den leitfähigen Schichten der Funktionsbeschichtung entstehen.

Die Reflexionsbeschichtung ist ein Dünnschichtstapel, also eine Schichtenfolge dünner Einzelschichten. Dieser Dünnschichtstapel enthält genau eine elektrisch leitfähige Schicht auf Basis von Silber. Die elektrisch leitfähige Schicht auf Basis von Silber verleiht der Reflexionsbeschichtung die grundlegenden reflektierenden Eigenschaften und außerdem eine IR-reflektierende Wirkung und eine elektrische Leitfähigkeit. Die elektrisch leitfähige Schicht auf Basis von Silber kann auch vereinfacht als Silberschicht bezeichnet werden. Die Reflexionsbeschichtung enthält genau eine Silberschicht, also nicht mehr als eine Silberschicht. Es ist ein besonderer Vorteil der vorliegenden Erfindung, dass mit einer Silberschicht die gewünschten Reflexionseigenschaften erreicht werden können, ohne dass die Transmission zu stark herabgesetzt würde, wie es bei der Verwendung mehrerer leitfähiger Schichten in der Reflexionsbeschichtung der Fall wäre. Es können aber weitere elektrisch leitfähige Schichten vorliegen, die nicht wesentlich zur elektrischen Leitfähigkeit der Reflexionsbeschichtung beitragen, sondern einen anderen Zweck erfüllen. Dies gilt insbesondere für metallische Blockerschichten mit geometrischen Dicken von weniger als 1 nm, die bevorzugt zwischen der Silberschicht und den dielektrischen Schichtaufbauten angeordnet sind.

Die elektrisch leitfähigen Schichten in der Funktionsbeschichtung und in der Reflexionsbeschichtung sind auf Basis von Silber ausgebildet. Die leitfähigen Schichten enthalten bevorzugt mindestens 90 Gew.-% Silber, besonders bevorzugt mindestens 99 Gew.-% Silber, ganz besonders bevorzugt mindestens 99,9 Gew.-% Silber. Die Silberschichten können Dotierungen aufweisen, beispielsweise Palladium, Gold, Kupfer oder Aluminium.

Die geometrische Schichtdicke der Silberschicht in der Reflexionsbeschichtung beträgt bevorzugt höchstens 15 nm, besonders bevorzugt höchstens 14 nm, ganz besonders bevorzugt höchstens 13 nm. Dadurch wird eine vorteilhafte Reflektivität erzielt, ohne die Transmission zu stark herabzusetzen. Die geometrische Schichtdicke der Silberschicht beträgt bevorzugt mindestens 5 nm, besonders bevorzugt mindestens 8 nm. Dünnere Silberschichten können zu einer Entnetzung des Schichtaufbaus führen. Besonders bevorzugt beträgt die geometrische Schichtdicke der Silberschicht von 10 nm bis 14 nm oder von 11 nm bis 13 nm.

Die geometrische Schichtdicke der einzelnen Silberschichten in der Funktionsbeschichtung beträgt bevorzugt höchstens 12 nm, besonders bevorzugt höchstens 10 nm, besonders bevorzugt etwa 8 nm. Dies führt zu einer hohen Reflektivität im IR-Bereich, ohne die Transmission zu stark zu verringern.

Erfindungsgemäß umfasst die Reflexionsbeschichtung keine dielektrischen Schichten, deren Brechungsindex weniger als 1,9 beträgt. Alle dielektrischen Schichten der Reflexionsbeschichtung weisen also einen Brechungsindex von mindestens 1,9 auf. Es ist ein besonderer Vorteil der vorliegenden Erfindung, dass die gewünschten Reflexionseigenschaften allein mit relativ hochbrechenden dielektrischen Schichten erreicht werden können. Da für niedrigbrechende Schichten mit einem Brechungsindex von kleiner als 1,9 insbesondere Siliziumoxid-Schichten in Frage kommen, die geringe Abscheidungsraten bei der magnetfeldunterstützten Kathodenabscheidung aufweisen, lässt sich die erfindungsgemäße Reflexionsbeschichtung so schnell und kostengünstig herstellen.

In einer vorteilhaften Ausgestaltung umfasst auch die Funktionsbeschichtung keine dielektrischer Schichten, deren Brechungsindex weniger als 1,9 beträgt. Alle dielektrischen Schichten der Funktionsbeschichtung weisen also einen Brechungsindex von mindestens 1,9 auf. Es ist ein besonderer Vorteil, dass niedrigbrechende Schichten mit einem Brechungsindex von kleiner als 1,9 (insbesondere Siliziumoxid-Schichten) nicht benötigt werden, da diese geringe Abscheidungsraten bei der magnetfeldunterstützten Kathodenabscheidung aufweisen. Somit lässt sich die erfindungsgemäße Windschutzscheibe so schnell und kostengünstig herstellen.

Die Reflexionsbeschichtung enthält oberhalb und unterhalb der Silberschicht unabhängig voneinander jeweils einen dielektrischen Schichtaufbau mit einem Brechungsindex von mindestens 1,9. Die im dielektrischen Schichtaufbau enthaltenen dielektrischen Schichten können beispielsweise auf Basis von Siliziumnitrid, Zinkoxid, Zinn-Zink-Oxid, Silizium-Metall-Mischnitriden wie Silizium-Zirkonium-Nitrid, Zirkoniumoxid, Nioboxid, Hafniumoxid, Tantaloxid, Wolframoxid oder Siliziumkarbid ausgebildet sein. Die genannten Oxide und Nitride können stöchiometrisch, unterstöchiometrisch oder überstöchiometrisch abgeschieden sein. Sie können Dotierungen aufweisen, beispielsweise Aluminium, Zirkonium, Titan oder Bor. Schichten dieser Materialien mit einem Brechungsindex von mindestens 1,9 als solche in Form von Einzelschichten sind bekannt und dem Fachmann über bekannte Methoden zugänglich. Vorzugsweise werden zur Abscheidung dieser Schichten Methoden der physikalischen Gasphasenabscheidung eingesetzt, insbesondere Magnetronsputtern.

Die optische Dicke des oberen dielektrischen Schichtaufbaus beträgt bevorzugt von 80 nm bis 200 nm, besonders bevorzugt von 100 nm bis 130 nm. Die optische Dicke des unteren dielektrischen Schichtaufbaus beträgt bevorzugt von 50 nm bis 100 nm, besonders bevorzugt von 60 nm bis 90 nm. Damit werden gute Ergebnisse erzielt.

In einer vorteilhaften Ausgestaltung ist in der Reflexionsbeschichtung oberhalb und unterhalb der Silberschicht jeweils eine dielektrische Schicht angeordnet, die als Entspiegelungsschicht bezeichnet werden kann und bevorzugt auf Basis eines Oxids, beispielsweise Zinnoxid, und/oder eines Nitrids, beispielsweise Siliziumnitrid, besonders bevorzugt auf Basis von Siliziumnitrid. Siliziumnitrid hat sich aufgrund seiner optischen Eigenschaften, seiner einfachen Verfügbarkeit sowie seiner hohen mechanischen und chemischen Stabilität bewährt. Das Silizium ist bevorzugt dotiert, beispielsweise mit Aluminium oder Bor. Im Falle von dielektrischen Schichtenfolgen ist die Schicht auf Basis von Siliziumnitrid bevorzugt die oberste Schicht der oberen Schichtenfolge beziehungsweise die unterste Schicht der unteren Schichtenfolge. Die geometrische Dicke der oberen Entspiegelungsschicht beträgt bevorzugt von 20 nm bis 100 nm, besonders bevorzugt von 40 nm bis 60 nm, insbesondere von 30 nm bis 50 nm. Die geometrische Dicke der unteren Entspiegelungsschicht beträgt bevorzugt von 10 nm bis 50 nm, besonders bevorzugt von 15 nm bis 40 nm, insbesondere von 20 nm bis 35 nm.

Neben der Entspiegelungsschicht können im dielektrischen Schichtaufbau optional weitere dielektrische Schichten mit Brechungsindex von mindestens 1,9 vorhanden sein. So können der obere dielektrische Schichtaufbau und der untere dielektrische Schichtaufbau unabhängig voneinander eine Anpassungsschicht enthalten, welche die Reflektivität der Silberschicht verbessern. Die Anpassungsschichten sind bevorzugt auf Basis von Zinkoxid ausgebildet, besonders bevorzugt Zinkoxid ZnO_{1-δ} mit 0 < δ < 0,01. Die Anpassungsschichten enthalten weiter bevorzugt Dotierungen. Die Anpassungsschichten können beispielsweise Aluminium-dotiertes Zinkoxid (ZnO:Al) enthalten. Das Zinkoxid wird bevorzugt unterstöchiometrisch bezüglich des Sauerstoffs abgeschieden um eine Reaktion von überschüssigem Sauerstoff mit der silberhaltigen Schicht zu vermeiden. Die Anpassungsschichten sind bevorzugt angeordnet zwischen der Silberschicht und der Entspiegelungsschicht. Die geometrische Dicke der Anpassungsschicht beträgt bevorzugt von 5 nm bis 30 nm, besonders bevorzugt von 8 nm bis 12 nm.

Es können auch brechungsindexsteigernde Schichten in der Reflexionsbeschichtung vorhanden sein, die einen höheren Brechungsindex aufweisen als die Entspiegelungsschicht, ebenfalls unabhängig voneinander im oberen dielektrischen Schichtaufbau und im unteren dielektrischen Schichtaufbau. Dadurch können die optischen Eigenschaften weiter verbessert und feineingestellt werden. Die brechungsindexsteigernden Schichten enthalten bevorzugt ein Silizium-Metall-Mischnitrid wie Silizium-Zirkonium-Mischnitrid, Silizium-Aluminium-Mischnitrid, Silizium-Titan-Mischnitrid oder Silizium-Hafnium-Mischnitrid, besonders bevorzugt Silizium-Zirkonium-Mischnitrid. Der Anteil an Zirkonium beträgt dabei bevorzugt zwischen 15 und 45 Gew.-%, besonders bevorzugt zwischen 15 und 30 Gew.-%. Als alternative Materialien kommen beispielsweise WO₃, Nb₂O₅, Bi₂O₃, TiO₂, und/oder AIN in Betracht. Die brechungsindexsteigernden Schichten sind bevorzugt zwischen der Entspiegelungsschicht und der Silberschicht angeordnet beziehungsweise zwischen der Anpassungsschicht (soweit vorhanden) und der Entspiegelungsschicht. Die geometrische Dicke der brechungsindexsteigernden Schicht beträgt bevorzugt von 5 nm bis 30 nm, besonders bevorzugt von 5 nm bis 15 nm.

In einer bevorzugten Ausgestaltung der Erfindung ist in der Reflexionsbeschichtung unterhalb der elektrisch leitfähigen Schicht genau eine untere dielektrische Schicht mit einem Brechungsindex von mindestens 1,9 angeordnet, bevorzugt auf Basis von Siliziumnitrid. Das bedeutet, der untere dielektrische Schichtaufbau besteht aus genau einer unteren dielektrischen Schicht. Ebenso ist oberhalb der elektrisch leitfähigen Schicht genau eine obere dielektrische Schicht mit einem Brechungsindex von mindestens 1,9 angeordnet, bevorzugt auf Basis von Siliziumnitrid. Das bedeutet der obere dielektrische Schichtaufbau besteht aus genau einer oberen dielektrischen Schicht. Es ergibt sich die Schichtenfolge ausgehend vom Substrat: untere Entspiegelungsschicht - Silberschicht - obere Entspiegelungsschicht. Die Reflexionsbeschichtung enthält bevorzugt keine weiteren dielektrischen Schichten. Die geometrische Dicke der oberen Entspiegelungsschicht beträgt bevorzugt von 20 nm bis 100 nm, besonders bevorzugt von 40 nm bis 60 nm, insbesondere von 30 nm bis 50 nm. Die geometrische Dicke der unteren Entspiegelungsschicht beträgt bevorzugt von 10 nm bis 50 nm, besonders bevorzugt von 15 nm bis 40 nm, insbesondere von 20 nm bis 35 nm.

In einer weiteren bevorzugten Ausgestaltung der Erfindung ist in der Reflexionsbeschichtung unterhalb der elektrisch leitfähigen Schicht eine erste untere dielektrische Schicht (Entspiegelungsschicht) und eine zweite untere dielektrische Schicht (Anpassungsschicht) angeordnet. Das bedeutet, der untere Schichtaufbau umfasst eine erste untere dielektrische Schicht und eine zweite untere dielektrische Schicht. Ebenso ist oberhalb der elektrisch leitfähigen Schicht eine erste obere dielektrische Schicht (Entspiegelungsschicht) und eine zweite obere dielektrische Schicht (Anpassungsschicht) angeordnet. Das bedeutet, der obere Schichtaufbau umfasst eine erste obere dielektrische Schicht und eine zweite obere dielektrische Schicht oder besteht daraus. Die Entspiegelungs- und Anpassungsschichten weisen einen Brechungsindex von mindestens 1,9 auf. Die Entspiegelungsschichten sind bevorzugt auf Basis von Siliziumnitrid ausgebildet, die Anpassungsschichten auf Basis von Zinkoxid. Die Anpassungsschichten sind bevorzugt zwischen der jeweiligen Entspiegelungsschicht und der Silberschicht angeordnet: Es ergibt sich die Schichtenfolge ausgehend vom Substrat: untere Entspiegelungsschicht - untere Anpassungsschicht - Silberschicht - obere Anpassungsschicht - obere Entspiegelungsschicht. Die Reflexionsbeschichtung enthält bevorzugt keine weiteren dielektrischen Schichten. Die geometrische Dicke der oberen Entspiegelungsschicht beträgt bevorzugt von 20 nm bis 100 nm, besonders bevorzugt von 40 nm bis 60 nm, insbesondere von 30 nm bis 50 nm. Die geometrische Dicke der unteren Entspiegelungsschicht beträgt bevorzugt von 10 nm bis 50 nm, besonders bevorzugt von 15 nm bis 40 nm, insbesondere von 20 nm bis 35 nm.

Die geometrische Dicke der Anpassungsschichten beträgt bevorzugt von 5 nm bis 30 nm, besonders bevorzugt von 8 nm bis 12 nm.

In einer weiteren Ausgestaltung der Erfindung sind in der Reflexionsbeschichtung unterhalb der elektrisch leitfähigen Schicht eine erste untere dielektrische Schicht (Entspiegelungsschicht), eine zweite untere dielektrische Schicht (Anpassungsschicht) und eine dritte untere dielektrische Schicht (brechungsindexsteigernde Schicht) angeordnet. Das bedeutet, der untere Schichtaufbau umfasst eine erste untere dielektrische Schicht, eine zweite untere dielektrische Schicht und eine dritte untere dielektrische Schicht oder besteht daraus. Ebenso ist oberhalb der elektrisch leitfähigen Schicht eine erste obere dielektrische Schicht (Entspiegelungsschicht), eine zweite obere dielektrische Schicht (Anpassungsschicht) und eine dritte obere dielektrische Schicht (brechungsindexsteigernde Schicht) angeordnet. Das bedeutet, der obere Schichtaufbau umfasst eine erste obere dielektrische Schicht, eine zweite obere dielektrische Schicht und eine dritte obere dielektrische Schicht oder besteht daraus. Die Entspiegelungs- und Anpassungsschichten sowie die brechungsindexsteigernden Schichten weisen einen Brechungsindex von mindestens 1,9 auf. Die brechungsindexsteigernden Schichten weisen einen höheren Brechungsindex auf als die Entspiegelungsschichten, bevorzugt mindestens 2,1. Die Entspiegelungsschichten sind bevorzugt auf Basis von Siliziumnitrid ausgebildet, die Anpassungsschichten auf Basis von Zinkoxid, die brechungsindexsteigernden Schichten auf Basis eines Silizium-Metall-Mischnitrids, wie Silizium-Zirkonium-Mischnitrid oder Silizium-Hafnium-Mischnitrid. Die Anpassungsschichten weisen bevorzugt den geringsten Abstand zur Silberschicht auf, während die brechungsindexsteigernden Schichten zwischen den Anpassungsschichten und den Entspiegelungsschichten angeordnet sind. Es ergibt sich die Schichtenfolge ausgehend vom Substrat: untere Entspiegelungsschicht - untere brechungsindexsteigernde Schicht - untere Anpassungsschicht - Silberschicht - obere Anpassungsschicht - obere brechungsindexsteigernde Schicht - obere Entspiegelungsschicht. Die Reflexionsbeschichtung enthält bevorzugt keine weiteren dielektrischen Schichten. Die geometrische Dicke der oberen Entspiegelungsschicht beträgt bevorzugt von 20 nm bis 100 nm, besonders bevorzugt von 40 nm bis 60 nm, insbesondere von 30 nm bis 50 nm. Die geometrische Dicke der unteren Entspiegelungsschicht beträgt bevorzugt von 10 nm bis 50 nm, besonders bevorzugt von 15 nm bis 40 nm, insbesondere von 20 nm bis 35 nm. Die geometrische Dicke der Anpassungsschichten beträgt bevorzugt von 5 nm bis 30 nm, besonders bevorzugt von 8 nm bis 12 nm. Die geometrische Dicke der brechungsindexsteigernden Schichten beträgt bevorzugt von 5 nm bis 30 nm, besonders bevorzugt von 5 nm bis 15 nm.

Da der untere Schichtaufbau und der obere Schichtaufbau unabhängig voneinander ausgebildet werden können, sind auch Kombinationen der vorstehend beschriebenen Ausgestaltungen möglich, wobei der obere dielektrische Schichtaufbau gemäß einer Ausgestaltung ausgebildet ist und der untere dielektrische Schichtaufbau gemäß einer anderen. Es ergeben sich die folgenden bevorzugten Schichtenfolgen (jeweils ausgehend vom Substrat, also derjenigen Oberfläche, auf die die Reflexionsbeschichtung abgeschieden ist:
- untere Entspiegelungsschicht - Silberschicht - obere Entspiegelungsschicht
- untere Entspiegelungsschicht - Silberschicht - obere Anpassungsschicht - obere Entspiegelungsschicht
- untere Entspiegelungsschicht - Silberschicht - obere Anpassungsschicht - obere brechungsindexsteigernde Schicht - obere Entspiegelungsschicht
- untere Entspiegelungsschicht - untere Anpassungsschicht - Silberschicht - obere Entspiegelungsschicht
- untere Entspiegelungsschicht - untere Anpassungsschicht - Silberschicht - obere Anpassungsschicht - obere Entspiegelungsschicht
- untere Entspiegelungsschicht - untere Anpassungsschicht - Silberschicht - obere Anpassungsschicht - obere brechungsindexsteigernde Schicht - obere Entspiegelungsschicht
- untere Entspiegelungsschicht - untere brechungsindexsteigernde Schicht - untere Anpassungsschicht - Silberschicht - obere Entspiegelungsschicht
- untere Entspiegelungsschicht - untere brechungsindexsteigernde Schicht - untere Anpassungsschicht - Silberschicht - obere Anpassungsschicht - obere Entspiegelungsschicht
- untere Entspiegelungsschicht - untere brechungsindexsteigernde Schicht - untere Anpassungsschicht - Silberschicht - obere Anpassungsschicht - obere brechungsindexsteigernde Schicht - obere Entspiegelungsschicht

In einer vorteilhaften Ausgestaltung der Erfindung umfasst die Reflexionsbeschichtung mindestens eine metallische Blockerschicht. Die Blockerschicht kann unterhalb und/oder oberhalb der Silberschicht angeordnet sein und steht bevorzugt mit der Silberschicht in direktem Kontakt. Die Blockerschicht liegt dann zwischen Silberschicht und dielektrischem Schichtaufbau. Die Blockerschicht dient dem Oxidationsschutz der Silberschicht insbesondere bei Temperaturbehandlungen der beschichteten Scheibe, wie sie typischerweise im Rahmen von Biegeprozessen vorkommen. Die Blockerschicht weist bevorzugt eine geometrische Dicke von weniger als 1 nm auf, beispielsweise 0,1 nm bis 0,5 nm. Die Blockerschicht ist bevorzugt auf Basis von Titan oder einer Nickel-Chrom-Legierung ausgebildet.

Die Blockerschicht ändert die optischen Eigenschaften der Reflexionsbeschichtung nur unwesentlich und ist bevorzugt bei allen vorstehend beschriebenen Ausgestaltungen vorhanden. Besonders bevorzugt ist die Blockerschicht direkt oberhalb der Silberschicht angeordnet, also zwischen Silberschicht und oberem dielektrischen Schichtaufbau, wo sie besonders effektiv ist. Es ergeben sich folgende bevorzugte Schichtenfolgen:
- untere Entspiegelungsschicht - Silberschicht - Blockerschicht - obere Entspiegelungsschicht
- untere Entspiegelungsschicht - Silberschicht - Blockerschicht - obere Anpassungsschicht - obere Entspiegelungsschicht
- untere Entspiegelungsschicht - Silberschicht - Blockerschicht - obere Anpassungsschicht - obere brechungsindexsteigernde Schicht - obere Entspiegelungsschicht
- untere Entspiegelungsschicht - untere Anpassungsschicht - Silberschicht - Blockerschicht - obere Entspiegelungsschicht
- untere Entspiegelungsschicht - untere Anpassungsschicht - Silberschicht - Blockerschicht - obere Anpassungsschicht - obere Entspiegelungsschicht
- untere Entspiegelungsschicht - untere Anpassungsschicht - Silberschicht - Blockerschicht - obere Anpassungsschicht - obere brechungsindexsteigernde Schicht - obere Entspiegelungsschicht
- untere Entspiegelungsschicht - untere brechungsindexsteigernde Schicht - untere Anpassungsschicht - Silberschicht - Blockerschicht - obere Entspiegelungsschicht
- untere Entspiegelungsschicht - untere brechungsindexsteigernde Schicht - untere Anpassungsschicht - Silberschicht - Blockerschicht - obere Anpassungsschicht - obere Entspiegelungsschicht
- untere Entspiegelungsschicht - untere brechungsindexsteigernde Schicht - untere Anpassungsschicht - Silberschicht - Blockerschicht - obere Anpassungsschicht - obere brechungsindexsteigernde Schicht - obere Entspiegelungsschicht

Es kann jeweils optional eine zusätzliche Blockerschicht direkt unterhalb der Silberschicht angeordnet sein, also zwischen Silberschicht und unterem dielektrischen Schichtaufbau.

Die Funktionsbeschichtung enthält bevorzugt oberhalb und unterhalb einer elektrisch leitfähigen Schicht auf Basis von Silber unabhängig voneinander jeweils ein dielektrisches Schichtmodul mit einem Brechungsindex von mindestens 1,9. Bei einer Funktionsbeschichtung mit mehreren Silberschichten haben bevorzugt alle dielektrischen Schichtmodule einen Brechungsindex von mindestens 1,9. Die im dielektrischen Schichtmodul enthaltenen dielektrischen Schichten können beispielsweise auf Basis von Siliziumnitrid, Zinkoxid, Zinn-Zink-Oxid, Silizium-Metall-Mischnitriden wie Silizium-Zirkonium-Nitrid, Zirkoniumoxid, Nioboxid, Hafniumoxid, Tantaloxid, Wolframoxid oder Siliziumkarbid ausgebildet sein. Die genannten Oxide und Nitride können stöchiometrisch, unterstöchiometrisch oder überstöchiometrisch abgeschieden sein. Sie können Dotierungen aufweisen, beispielsweise Aluminium, Zirkonium, Titan oder Bor.

Die optische Dicke des obersten dielektrischen Schichtmoduls beträgt bevorzugt von 70 nm bis 200 nm, besonders bevorzugt von 80 nm bis 100 nm. Die optische Dicke des untersten dielektrischen Schichtmoduls beträgt bevorzugt von 70 nm bis 100 nm, besonders bevorzugt von 80 nm bis 150 nm. Damit werden gute Ergebnisse erzielt. Die optische Dicke der mittleren dielektrischen Schichtmodule beträgt bevorzugt 100 nm bis 400 nm, bevorzugt von 150 nm bis 300 nm, besonders bevorzugt von 160 nm bis 200 nm.

In einer vorteilhaften Ausgestaltung ist in der Funktionsbeschichtung im obersten und untersten Schichtmodul und wenn vorhanden in den mittleren Schichtmodulen jeweils eine dielektrische Schicht angeordnet, die als Entspiegelungsschicht bezeichnet werden kann und bevorzugt auf Basis eines Oxids ausgebildet ist, beispielsweise Zinnoxid, und/oder eines Nitrids, beispielsweise Siliziumnitrid, besonders bevorzugt auf Basis von Siliziumnitrid. Siliziumnitrid hat sich aufgrund seiner optischen Eigenschaften, seiner einfachen Verfügbarkeit sowie seiner hohen mechanischen und chemischen Stabilität bewährt. Das Silizium ist bevorzugt dotiert, beispielsweise mit Aluminium oder Bor.

Im Falle des obersten und untersten Schichtmoduls ist die Schicht auf Basis von Siliziumnitrid bevorzugt die oberste Schicht des obersten Schichtmoduls beziehungsweise die unterste Schicht des untersten Schichtmoduls. Die geometrische Dicke der Entspiegelungsschicht im obersten oder untersten Schichtmodul beträgt bevorzugt von 10 nm bis 50 nm, besonders bevorzugt von 15 nm bis 40 nm, insbesondere von 20 nm bis 35 nm. Die geometrische Dicke der Entspiegelungsschicht in einem mittleren Schichtmodul beträgt bevorzugt von 30 nm bis 100 nm, besonders bevorzugt von 40 nm bis 80 nm, insbesondere von 50 nm bis 70 nm.

Neben der Entspiegelungsschicht können in den dielektrischen Schichtmodulen der Funktionsschicht optional weitere dielektrische Schichten mit Brechungsindex von mindestens 1,9 vorhanden sein. So können das oberste und das unterste dielektrische Schichtmodul unabhängig voneinander eine Anpassungsschicht enthalten, welche die Reflektivität der Silberschicht verbessern. Die mittleren Schichtmodule können unabhängig voneinander eine oder zwei Anpassungsschichten enthalten. Die Anpassungsschichten sind bevorzugt auf Basis von Zinkoxid ausgebildet, besonders bevorzugt Zinkoxid ZnO_{1-δ} mit 0 < δ < 0,01. Die Anpassungsschichten enthalten weiter bevorzugt Dotierungen. Die Anpassungsschichten können beispielsweise Aluminium-dotiertes Zinkoxid (ZnO:Al) enthalten. Das Zinkoxid wird bevorzugt unterstöchiometrisch bezüglich des Sauerstoffs abgeschieden um eine Reaktion von überschüssigem Sauerstoff mit der silberhaltigen Schicht zu vermeiden. Die Anpassungsschichten sind im obersten und untersten dielektrischen Schichtmodul bevorzugt angeordnet zwischen der Silberschicht und der Entspiegelungsschicht. Die Anpassungsschichten sind in den mittleren dielektrischen Schichtmodulen bevorzugt angeordnet zwischen den angrenzenden Silberschichten und der Entspiegelungsschicht. Die geometrische Dicke der Anpassungsschichten beträgt bevorzugt von 5 nm bis 30 nm, besonders bevorzugt von 8 nm bis 12 nm.

Es können auch brechungsindexsteigernde Schichten in der Funktionsbeschichtung vorhanden sein, die einen höheren Brechungsindex aufweisen als die Entspiegelungsschicht, ebenfalls unabhängig voneinander im obersten, untersten und optional mittleren dielektrischen Schichtmodul. Dadurch können die optischen Eigenschaften weiter verbessert und feineingestellt werden. Die brechungsindexsteigernden Schichten enthalten bevorzugt ein Silizium-Metall-Mischnitrid wie Silizium-Zirkonium-Mischnitrid, Silizium-Aluminium-Mischnitrid, Silizium-Titan-Mischnitrid oder Silizium-Hafnium-Mischnitrid, besonders bevorzugt Silizium-Zirkonium-Mischnitrid. Der Anteil an Zirkonium beträgt dabei bevorzugt zwischen 15 und 45 Gew.-%, besonders bevorzugt zwischen 15 und 30 Gew.-%. Als alternative Materialien kommen beispielsweise WO₃, Nb₂O₅, Bi₂O₃, TiO₂, und/oder AIN in Betracht. Die brechungsindexsteigernden Schichten sind bevorzugt zwischen der Entspiegelungsschicht und der Silberschichtung angeordnet beziehungsweise zwischen der Anpassungsschicht (soweit vorhanden) und der Entspiegelungsschicht. Die geometrische Dicke der brechungsindexsteigernden Schicht beträgt bevorzugt von 5 nm bis 30 nm, besonders bevorzugt von 5 nm bis 15 nm.

In einer bevorzugten Ausgestaltung der Erfindung besteht das unterste Schichtmodul in der Funktionsbeschichtung aus genau einer unteren dielektrischen Schicht mit einem Brechungsindex von mindestens 1,9, bevorzugt auf Basis von Siliziumnitrid. Ebenso besteht das oberste Schichtmodul aus genau einem oberen dielektrischen Schichtmodul mit einem Brechungsindex von mindestens 1,9, bevorzugt auf Basis von Siliziumnitrid. Die Funktionsbeschichtung enthält bevorzugt keine weiteren dielektrischen Schichten. Die geometrische Dicke der Entspiegelungsschicht im obersten und untersten Schichtmodul beträgt bevorzugt von 10 nm bis 50 nm, besonders bevorzugt von 15 nm bis 40 nm, insbesondere von 20 nm bis 35 nm. Die geometrische Dicke der Entspiegelungsschicht im mittleren dielektrischen Schichtmodul beträgt bevorzugt von 50 nm bis 100 nm, besonders bevorzugt von 55 nm bis 80 nm, insbesondere von 60 nm bis 70 nm.

In einer weiteren bevorzugten Ausgestaltung der Erfindung ist unabhängig voneinander in dem untersten Schichtmodul, dem obersten Schichtmodul und dem mittleren Schichtmodul der Funktionsbeschichtung eine erste dielektrische Schicht (Entspiegelungsschicht) und eine zweite dielektrische Schicht (Anpassungsschicht) angeordnet. Die Entspiegelungs- und Anpassungsschichten weisen einen Brechungsindex von mindestens 1,9 auf. Die Entspiegelungsschichten sind bevorzugt auf Basis von Siliziumnitrid ausgebildet, die Anpassungsschichten auf Basis von Zinkoxid. Die Anpassungsschichten sind bevorzugt zwischen der jeweiligen Entspiegelungsschicht und einer Silberschicht angeordnet. Die Funktionsbeschichtung enthält bevorzugt keine weiteren dielektrischen Schichten.

Besonders bevorzugt enthalten das oberste und unterste Schichtmodul eine Entspiegelungsschicht, eine Anpassungsschicht und keine weiteren dielektrischen Schichten. Die mittleren Schichtmodule enthalten bevorzugt eine untere Anpassungsschicht, eine Entspiegelungsschicht und eine obere Anpassungsschicht in dieser Reihenfolge und keine weiteren dielektrischen Schichten. Die geometrische Dicke der Entspiegelungsschicht im obersten oder untersten Schichtmodul beträgt bevorzugt von 10 nm bis 50 nm, besonders bevorzugt von 15 nm bis 40 nm, insbesondere von 20 nm bis 35 nm. Die geometrische Dicke der Entspiegelungsschicht in einem mittleren Schichtmodul beträgt bevorzugt von 30 nm bis 100 nm, besonders bevorzugt von 40 nm bis 80 nm, insbesondere von 50 nm bis 70 nm. Die geometrische Dicke der Anpassungsschichten beträgt bevorzugt von 5 nm bis 30 nm, besonders bevorzugt von 8 nm bis 12 nm.

In einer weiteren bevorzugten Ausgestaltung der Erfindung sind in der Funktionsbeschichtung unabhängig voneinander im untersten Schichtmodul und im obersten Schichtmodul eine erste dielektrische Schicht (Entspiegelungsschicht), eine zweite dielektrische Schicht (Anpassungsschicht) und eine dritte dielektrische Schicht (brechungsindexsteigernde Schicht) angeordnet. Bevorzugt sind im untersten und obersten Schichtmodul keine weiteren dielektrischen Schichten angeordnet. In den mittleren Schichtmodulen sind bevorzugt eine erste dielektrische Schicht (Anpassungsschicht), eine zweite dielektrische Schicht (Entspiegelungsschicht) und eine dritte dielektrische Schicht (Anpassungsschicht) angeordnet. Die Entspiegelungs- und Anpassungsschichten sowie die brechungsindexsteigernden Schichten weisen einen Brechungsindex von mindestens 1,9 auf. Die brechungsindexsteigernden Schichten weisen einen höheren Brechungsindex auf als die Entspiegelungsschichten, bevorzugt mindestens 2,1. Die Entspiegelungsschichten sind bevorzugt auf Basis von Siliziumnitrid ausgebildet, die Anpassungsschichten auf Basis von Zinkoxid, die brechungsindexsteigernden Schichten auf Basis eines Silizium-Metall-Mischnitrids, wie Silizium-Zirkonium-Mischnitrid oder Silizium-Hafnium-Mischnitrid. Die Anpassungsschichten weisen bevorzugt den geringsten Abstand zu einer Silberschicht auf, während die brechungsindexsteigernden Schichten zwischen den Anpassungsschichten und den Entspiegelungsschichten angeordnet sind. Es ergibt sich die Schichtenfolge ausgehend vom Substrat für das oberste und unterste Schichtmodul: (Substrat) - Entspiegelungsschicht - Anpassungsschicht - brechungsindexsteigernde Schicht - (Silber). Es ergibt sich die Schichtenfolge ausgehend von einer Silberschicht für das mittlere Schichtmodul: (Silber) - Anpassungsschicht - Entspiegelungsschicht - Anpassungsschicht - (Silber). Die Funktionsbeschichtung enthält bevorzugt keine weiteren dielektrischen Schichten. Die geometrische Dicke der Entspiegelungsschicht im obersten oder untersten Schichtmodul beträgt bevorzugt von 10 nm bis 50 nm, besonders bevorzugt von 15 nm bis 40 nm, insbesondere von 20 nm bis 35 nm. Die geometrische Dicke der Entspiegelungsschicht in einem mittleren Schichtmodul beträgt bevorzugt von 30 nm bis 100 nm, besonders bevorzugt von 40 nm bis 80 nm, insbesondere von 50 nm bis 70 nm. Die geometrische Dicke der Anpassungsschichten beträgt bevorzugt von 5 nm bis 30 nm, besonders bevorzugt von 8 nm bis 12 nm. Die geometrische Dicke der brechungsindexsteigernden Schichten beträgt bevorzugt von 5 nm bis 30 nm, besonders bevorzugt von 5 nm bis 15 nm.

Da die einzelnen Schichtmodule unabhängig voneinander ausgebildet werden können, sind auch Kombinationen der vorstehend beschriebenen Ausgestaltungen möglich, wobei das oberste dielektrische Schichtmodul gemäß einer Ausgestaltung ausgebildet ist und das unterste dielektrische Schichtmodul gemäß einer anderen und bei mehreren Silberschichten das mittlere Schichtmodul gemäß einer weiteren. Es ergeben sich die folgenden bevorzugten Schichtenfolgen (jeweils ausgehend vom Substrat, also derjenigen Oberfläche, auf die die Funktionsbeschichtung abgeschieden ist:
Für eine Silberschicht:
   - untere Entspiegelungsschicht - Silberschicht - obere Entspiegelungsschicht
   - untere Entspiegelungsschicht - Silberschicht - obere Anpassungsschicht - obere Entspiegelungsschicht
   - untere Entspiegelungsschicht - Silberschicht - obere Anpassungsschicht - obere brechungsindexsteigernde Schicht - obere Entspiegelungsschicht
   - untere Entspiegelungsschicht - untere Anpassungsschicht - Silberschicht - obere Entspiegelungsschicht
   - untere Entspiegelungsschicht - untere Anpassungsschicht - Silberschicht - obere Anpassungsschicht - obere Entspiegelungsschicht
   - untere Entspiegelungsschicht - untere Anpassungsschicht - Silberschicht - obere Anpassungsschicht - obere brechungsindexsteigernde Schicht - obere Entspiegelungsschicht
   - untere Entspiegelungsschicht - untere brechungsindexsteigernde Schicht - untere Anpassungsschicht - Silberschicht - obere Entspiegelungsschicht
   - untere Entspiegelungsschicht - untere brechungsindexsteigernde Schicht - untere Anpassungsschicht - Silberschicht - obere Anpassungsschicht - obere Entspiegelungsschicht
   - untere Entspiegelungsschicht - untere brechungsindexsteigernde Schicht - untere Anpassungsschicht - Silberschicht - obere Anpassungsschicht - obere brechungsindexsteigernde Schicht - obere Entspiegelungsschicht
Für zwei Silberschichten werden beispielhaft einige Möglichkeiten aufgeführt:
   - untere Entspiegelungsschicht - Silberschicht - mittlere Entspiegelungsschicht - Silberschicht - obere Entspiegelungsschicht
   - untere Entspiegelungsschicht - untere Anpassungsschicht - Silberschicht - mittlere Anpassungsschicht - mittlere Entspiegelungsschicht - mittlere Anpassungsschicht - Silberschicht - obere Anpassungsschicht - obere Entspiegelungsschicht
   - untere Entspiegelungsschicht - untere Anpassungsschicht - Silberschicht - mittlere Anpassungsschicht - mittlere Entspiegelungsschicht - mittlere Anpassungsschicht - Silberschicht - obere Anpassungsschicht - obere brechungsindexsteigernde Schicht - obere Entspiegelungsschicht
   - untere Entspiegelungsschicht - untere brechungsindexsteigernde Schicht - untere Anpassungsschicht - Silberschicht - mittlere Anpassungsschicht - mittlere Entspiegelungsschicht - mittlere Anpassungsschicht - Silberschicht - obere Anpassungsschicht - obere brechungsindexsteigernde Schicht - obere Entspiegelungsschicht
   - untere Entspiegelungsschicht - untere brechungsindexsteigernde Schicht - Silberschicht - mittlere Anpassungsschicht - mittlere Entspiegelungsschicht - Silberschicht - obere Anpassungsschicht - obere Entspiegelungsschicht
Für drei Silberschichten gelten analoge Aufbauten, wobei jeweils eine Silberschicht und ein weiteres dielektrisches Schichtmodul hinzugefügt wird.

In einer vorteilhaften Ausgestaltung der Erfindung umfasst die Funktionsbeschichtung mindestens eine metallische Blockerschicht. Die Blockerschicht kann unterhalb und/oder oberhalb einer Silberschicht angeordnet sein und steht bevorzugt mit der Silberschicht in direktem Kontakt. Bevorzugt ist unterhalb und / oder oberhalb jeder Silberschicht eine Blockerschicht angeordnet. Die Blockerschicht liegt dann zwischen Silberschicht und dielektrischem Schichtmodul. Die Blockerschicht dient dem Oxidationsschutz der Silberschicht insbesondere bei Temperaturbehandlungen der beschichteten Scheibe, wie sie typischerweise im Rahmen von Biegeprozessen vorkommen. Die Blockerschicht weist bevorzugt eine geometrische Dicke von weniger als 1 nm auf, beispielsweise 0,1 nm bis 0,5 nm. Die Blockerschicht ist bevorzugt auf Basis von Titan oder einer Nickel-Chrom-Legierung ausgebildet.

Die Blockerschicht ändert die optischen Eigenschaften der Funktionsbeschichtung nur unwesentlich und ist bevorzugt bei allen vorstehend beschriebenen Ausgestaltungen vorhanden. Besonders bevorzugt ist die Blockerschicht direkt oberhalb der einen / jeder Silberschicht angeordnet, also jeweils zwischen Silberschicht und dem angrenzenden oberen dielektrischen Schichtmodul, wo sie besonders effektiv ist.

Es ergeben sich folgende bevorzugte Schichtenfolgen für die bereits oben aufgeführten beispielhaften Schichtenfolgen:
Für eine Silberschicht:
   - untere Entspiegelungsschicht - Silberschicht - Blockerschicht - obere Entspiegelungsschicht
   - untere Entspiegelungsschicht - Silberschicht - Blockerschicht - obere Anpassungsschicht - obere Entspiegelungsschicht
   - untere Entspiegelungsschicht - Silberschicht - Blockerschicht - obere Anpassungsschicht - obere brechungsindexsteigernde Schicht - obere Entspiegelungsschicht
   - untere Entspiegelungsschicht - untere Anpassungsschicht - Silberschicht - Blockerschicht - obere Entspiegelungsschicht
   - untere Entspiegelungsschicht - untere Anpassungsschicht - Silberschicht - Blockerschicht - obere Anpassungsschicht - obere Entspiegelungsschicht
   - untere Entspiegelungsschicht - untere Anpassungsschicht - Silberschicht - Blockerschicht - obere Anpassungsschicht - obere brechungsindexsteigernde Schicht - obere Entspiegelungsschicht
   - untere Entspiegelungsschicht - untere brechungsindexsteigernde Schicht - untere Anpassungsschicht - Silberschicht - Blockerschicht - obere Entspiegelungsschicht
   - untere Entspiegelungsschicht - untere brechungsindexsteigernde Schicht - untere Anpassungsschicht - Silberschicht - Blockerschicht - obere Anpassungsschicht - obere Entspiegelungsschicht
   - untere Entspiegelungsschicht - untere brechungsindexsteigernde Schicht - untere Anpassungsschicht - Silberschicht - Blockerschicht - obere Anpassungsschicht - obere brechungsindexsteigernde Schicht - obere Entspiegelungsschicht
Für zwei Silberschichten werden beispielhaft einige Möglichkeiten aufgeführt:
   - untere Entspiegelungsschicht - Silberschicht - Blockerschicht - mittlere Entspiegelungsschicht - Silberschicht - Blockerschicht - obere Entspiegelungsschicht
   - untere Entspiegelungsschicht - untere Anpassungsschicht - Silberschicht - Blockerschicht - mittlere Anpassungsschicht - mittlere Entspiegelungsschicht - mittlere Anpassungsschicht - Silberschicht - Blockerschicht - obere Anpassungsschicht - obere Entspiegelungsschicht
   - untere Entspiegelungsschicht - untere Anpassungsschicht - Silberschicht - Blockerschicht - mittlere Anpassungsschicht - mittlere Entspiegelungsschicht - mittlere Anpassungsschicht - Silberschicht - Blockerschicht - obere Anpassungsschicht - obere brechungsindexsteigernde Schicht - obere Entspiegelungsschicht
   - untere Entspiegelungsschicht - untere brechungsindexsteigernde Schicht - untere Anpassungsschicht - Silberschicht - Blockerschicht - mittlere Anpassungsschicht - mittlere Entspiegelungsschicht - mittlere Anpassungsschicht - Silberschicht - Blockerschicht - obere Anpassungsschicht - obere brechungsindexsteigernde Schicht - obere Entspiegelungsschicht
   - untere Entspiegelungsschicht - untere brechungsindexsteigernde Schicht - Silberschicht - Blockerschicht - mittlere Anpassungsschicht - mittlere Entspiegelungsschicht - Silberschicht - Blockerschicht - obere Anpassungsschicht - obere Entspiegelungsschicht
Für drei Silberschichten gelten analoge Aufbauten, wobei jeweils eine Silberschicht und ein weiteres dielektrisches Schichtmodul hinzugefügt wird.

Es kann jeweils optional eine zusätzliche Blockerschicht direkt unterhalb der / jeder Silberschicht angeordnet sein, also zwischen Silberschicht und unterem dielektrischen Schichtmodul.

Gemäß einer weiteren Alternative der Erfindung ist die Funktionsbeschichtung in Form einer mehrschichtigen polymeren Folie ausgeführt.

Die mehrschichtige polymere Folie umfasst keine elektrisch leitfähigen Schichten. Bevorzugt umfasst die mehrschichtige polymere Folie ausschließlich polymere Schichten. Die mehrschichtige polymere Folie umfasst bevorzugt 1 bis 1000, besonders bevorzugt 10 bis 500, weiterhin bevorzugt 50 bis 100 polymere Schichten. Die mehrschichtige polymere Folie reflektiert IR-Strahlung während sie sichtbares Licht durchlässt. Somit wird der TTS-Wert der Windschutzscheibe erniedrigt, während der TL-Wert kaum sinkt. Ein Vorteil ist zudem, dass die Folien keine Abschirmung elektronischer Signale von zum Beispiel Mobiltelefonen bewirken. Die mehrschichtige polymere Folie kann polymere Schichten aus unterschiedlichen Materialien umfassen. Aufeinanderfolgende polymere Schichten der mehrschichtigen polymeren Folie unterscheiden sich bevorzugt in ihren Brechungsindizes, sodass die IR-Strahlung aufgrund optischer Interferenz reflektiert wird. Derartige Folien sind kommerziell erhältlich zum Beispiel von der Firma 3M unter dem Namen UCSF (Ultra-Clear Solar Film). Die mehrschichtige polymere Folie wird bevorzugt auf einer polymeren Trägerfolie bereitgestellt. Bevorzugt ist die mehrschichtige polymere Folie in die thermoplastische Zwischenschicht eingebettet.

Der Projektor ist innenraumseitig der Windschutzscheibe angeordnet und bestrahlt die Windschutzscheibe über die innenraumseitige Oberfläche der Innenscheibe. Er ist auf den HUD-Bereich gerichtet und bestrahlt diesen zur Erzeugung der HUD-Projektion. Die Strahlung des Projektors ist erfindungsgemäß überwiegend p-polarisiert, weist also einen p-polarisierten Strahlungsanteil von größer als 50% auf. Je höher der Anteil der p-polarisierten Strahlung an der Gesamtstrahlung des Projektors ist, desto intensitätsstärker ist das gewünschte Projektionsbild und desto intensitätsschwächer sind unerwünschte Reflexionen an den Oberflächen der Windschutzscheibe. Der p-polarisierte Strahlungsanteil des Projektors beträgt bevorzugt mindestens 70%, besonders bevorzugt mindestens 80% und insbesondere mindestens 90%. In einer besonders vorteilhaften Ausgestaltung ist die Strahlung des Projektors im Wesentlichen rein p-polarisiert - der p-polarisierte Strahlungsanteil beträgt also 100% oder weicht nur unwesentlich davon ab. Die Angabe der Polarisationsrichtung bezieht sich dabei auf die Einfallsebene der Strahlung auf der Windschutzscheibe. Mit p-polarisierter Strahlung wird eine Strahlung bezeichnet, deren elektrisches Feld in der Einfallsebene schwingt. Mit s-polarisierter Strahlung wird eine Strahlung bezeichnet, deren elektrisches Feld senkrecht zur Einfallsebene schwingt. Die Einfallsebene wird durch den Einfallsvektor und die Flächennormale der Windschutzscheibe im geometrischen Zentrum des bestrahlten Bereichs aufgespannt.

Die Strahlung des Projektors trifft bevorzugt mit einem Einfallswinkel von 45° bis 70°, insbesondere von 60° bis 70° auf die Windschutzscheibe. In einer vorteilhaften Ausgestaltung weicht der Einfallswinkel um höchstens 10° vom Brewsterwinkel ab. Die p-polarisierte Strahlung wird dann nur unwesentlich an den Oberflächen der Windschutzscheibe reflektiert, so dass kein Geisterbild erzeugt wird. Der Einfallswinkel ist der Winkel zwischen dem Einfallsvektor der Projektorstrahlung und der innenraumseitigen Flächennormalen (also die Flächennormale auf die innenraumseitige externe Oberfläche der Windschutzscheibe) im geometrischen Zentrum des HUD-Bereichs. Der Brewsterwinkel für einen Luft-Glas-Übergang im Falle von Kalk-Natron-Glas, das für Fensterscheiben allgemein üblich ist, beträgt 56,5°. Idealerweise sollte der Einfallswinkel diesem Brewster-Winkel möglichst nahekommen. Es können aber beispielsweise auch Einfallswinkel von 65° verwendet werden, die für HUD-Projektionsanordnungen üblich sind, in Fahrzeugen problemlos zu realisieren sind und nur in einem geringen Maße vom Brewsterwinkel abweichen, so dass die Reflexion der p-polarisierten Strahlung nur unwesentlich zunimmt.

Da die Reflexion der Projektorstrahlung im Wesentlichen an der Reflexionsbeschichtung erfolgt und nicht an den externen Scheibenoberflächen, ist es nicht nötig, die externen Scheibenoberflächen in einem Winkel zueinander anzuordnen, um Geisterbilder zu vermeiden. Die externen Oberflächen der Windschutzscheibe sind daher bevorzugt im Wesentlichen parallel zueinander angeordnet. Die thermoplastische Zwischenschicht ist dazu bevorzugt nicht keilartig ausgebildet, sondern weist eine im Wesentlichen konstante Dicke auf, insbesondere auch im vertikalen Verlauf zwischen der Oberkante und der Unterkante der Windschutzscheibe, ebenso wie die Innenscheibe und die Außenscheibe. Eine keilartige Zwischenschicht würde dagegen im vertikalen Verlauf zwischen Unterkante und Oberkante der Windschutzscheibe eine veränderliche, insbesondere zunehmende Dicke aufweisen. Die Zwischenschicht ist typischerweise aus mindestens einer thermoplastischen Folie ausgebildet. Da Standardfolien deutlich kostengünstiger sind als Keilfolien, wird die Herstellung der Windschutzscheibe günstiger gestaltet.

Die Außenscheibe und die Innenscheibe sind bevorzugt aus Glas gefertigt, insbesondere aus Kalk-Natron-Glas, was für Fensterscheiben üblich ist. Die Scheiben können grundsätzlich aber auch aus anderen Glasarten (beispielsweise Borosilikatglas, Quarzglas, Aluminosilikatglas) oder transparenten Kunststoffen (beispielsweise Polymethylmethacrylat oder Polycarbonat) gefertigt sein. Die Dicke der Außenscheibe und der Innenscheibe kann breit variieren. Vorzugsweise werden Scheiben mit einer Dicke im Bereich von 0,8 mm bis 5 mm, bevorzugt von 1,4 mm bis 2,5 mm verwendet, beispielsweise die mit den Standarddicken 1,6 mm oder 2,1 mm.

Die Außenscheibe, die Innenscheibe und die thermoplastische Zwischenschicht können klar und farblos, aber auch getönt oder gefärbt sein. Die Gesamttransmission durch die Windschutzscheibe (samt Reflexionsbeschichtung und Funktionsbeschichtung) beträgt in einer bevorzugten Ausgestaltung größer 70%. Der Begriff Gesamttransmission bezieht sich auf das durch ECE-R 43, Anhang 3, § 9.1 festgelegte Verfahren zur Prüfung der Lichtdurchlässigkeit von Kraftfahrzeugscheiben. Die Außenscheibe und die Innenscheiben können unabhängig voneinander nicht vorgespannt, teilvorgespannt oder vorgespannt sein. Soll mindestens eine der Scheiben eine Vorspannung aufweisen, so kann dies eine thermische oder chemische Vorspannung sein.

In einer vorteilhaften Ausgestaltung ist die Außenscheibe getönt oder gefärbt. Dadurch kann die außenseitige Reflektivität der Windschutzscheibe verringert werden, wodurch der Eindruck der Scheibe angenehmer gestaltet wird für einen äußeren Betrachter. Um allerdings eine Lichttransmission von bevorzugt mindestens 70% für Windschutzscheiben zu gewährleisten (Gesamttransmission), sollte die Außenscheibe bevorzugt eine Lichttransmission von mindestens 80% aufweisen, besonders bevorzugt von mindestens 85%. Die Lichttransmission beschreibt dabei den bei einem Einstrahlwinkel von 0° transmittierten Strahlungsanteil innerhalb des sichtbaren Spektrums im Spektralbereich von 380 nm bis 780 nm. Die Lichttransmission ist mittels dem Fachmann bekannter Methoden mit kommerziell erhältlichen Messgeräten bestimmbar, beispielsweise mit Spektrometern der Firma Perkin Elmer. Die Innenscheibe und die Zwischenschicht sind bevorzugt klar, also nicht getönt oder gefärbt. Beispielsweise kann grün oder blau gefärbtes Glas als Außenscheibe eingesetzt werden.

Die Windschutzscheibe ist bevorzugt in einer oder in mehreren Richtungen des Raumes gebogen, wie es für Kraftfahrzeugscheiben üblich ist, wobei typische Krümmungsradien im Bereich von etwa 10 cm bis etwa 40 m liegen. Die Windschutzscheibe kann aber auch plan sein, beispielsweise wenn es als Scheibe für Busse, Züge oder Traktoren vorgesehen ist.

Die thermoplastische Zwischenschicht enthält zumindest ein thermoplastisches Polymer, bevorzugt Ethylenvinylacetat (EVA), Polyvinylbutyral (PVB) oder Polyurethan (PU) oder Gemische oder Copolymere oder Derivate davon, besonders bevorzugt PVB. Die Zwischenschicht ist typischerweise aus einer thermoplastischen Folie ausgebildet. Die Dicke der Zwischenschicht beträgt bevorzugt von 0,2 mm bis 2 mm, besonders bevorzugt von 0,3 mm bis 1 mm. Die thermoplastische Zwischenschicht kann aus einer einzigen oder mehreren einzelnen Folien bestehen.

Die Windschutzscheibe kann hergestellt werden durch an sich bekannte Verfahren. Die Außenscheibe und die Innenscheibe werden über die Zwischenschicht miteinander laminiert, beispielsweise durch Autoklavverfahren, Vakuumsackverfahren, Vakuumringverfahren, Kalanderverfahren, Vakuumlaminatoren oder Kombinationen davon. Die Verbindung von Außenscheibe und Innenscheibe erfolgt dabei üblicherweise unter Einwirkung von Hitze, Vakuum und/oder Druck.

Die Reflexionsbeschichtung und die Funktionsbeschichtung werden bevorzugt durch physikalische Gasphasenabscheidung (PVD) auf eine Scheibenoberfläche aufgebracht, besonders bevorzugt durch Kathodenzerstäubung ("Sputtern"), ganz besonders bevorzugt durch magnetfeldunterstütze Kathodenzerstäubung ("Magnetronsputtern"). Die Beschichtungen werden bevorzugt vor der Lamination aufgebracht. Statt die Reflexionsbeschichtung und / oder die Funktionsbeschichtung auf eine Scheibenoberfläche aufzubringen, kann sie grundsätzlich auch auf einer Trägerfolie aus bevorzugt Polyethylentherephthalat (PET) bereitgestellt werden, die in der thermoplastischen Zwischenschicht angeordnet wird.

Soll die Windschutzscheibe gebogen sein, so werden die Außenscheibe und die Innenscheibe bevorzugt vor der Lamination und bevorzugt nach etwaiger Beschichtungsprozesse einem Biegeprozess unterzogen. Bevorzugt werden die Außenscheibe und die Innenscheibe gemeinsam (d.h. zeitgleich und durch dasselbe Werkzeug) kongruent gebogen, weil dadurch die Form der Scheiben für die später erfolgende Laminierung optimal aufeinander abgestimmt sind. Typische Temperaturen für Glasbiegeprozesse betragen beispielsweise 500 °C bis 700 °C. Diese Temperaturbehandlung erhöht auch die Transparenz und verringert den Flächenwiderstand der Reflexionsbeschichtung.

Im Folgenden wird die Erfindung anhand einer Zeichnung und Ausführungsbeispielen näher erläutert. Die Zeichnung ist eine schematische Darstellung und nicht maßstabsgetreu. Die Zeichnung schränkt die Erfindung in keiner Weise ein.

Es zeigen:
- Fig. 1: eine Draufsicht auf eine Verbundscheibe einer gattungsgemäßen Projektionsanordnung,
- Fig. 2: einen Querschnitt durch eine gattungsgemäße Projektionsanordnung,
- Fig. 3: einen Querschnitt durch eine Verbundscheibe einer erfindungsgemäßen Projektionsanordnung,
- Fig. 4: einen Querschnitt durch eine Ausgestaltung einer Windschutzscheibe für eine erfindungsgemäße Projektionsanordnung,
- Fig. 5a,b: jeweils einen Querschnitt durch eine Ausgestaltung einer Windschutzscheibe für eine erfindungsgemäße Projektionsanordnung,
- Fig. 6: Transmissionsspektren der Beispiele 1, 3 und 4.

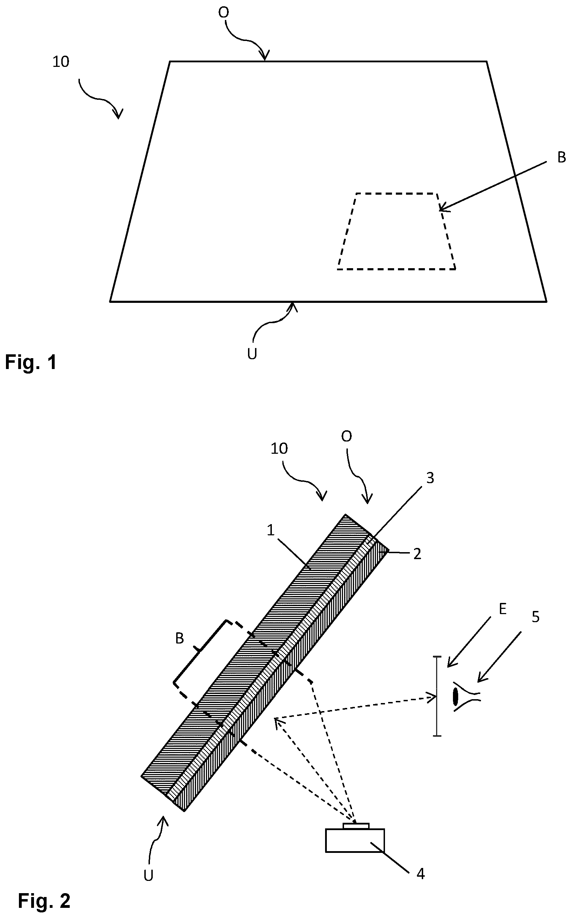

Fig. 1 und Fig. 2 zeigen je ein Detail einer gattungsgemäßen Projektionsanordnung für ein HUD. Die Projektionsanordnung umfasst eine Windschutzscheibe 10, insbesondere die Windschutzscheibe eines Personenkraftwagens. Die Projektionsanordnung umfasst außerdem einen Projektor 4, welcher auf einen Bereich der Verbundscheibe 10 gerichtet ist. In diesem Bereich, der üblicherweise als HUD-Bereich B bezeichnet wird, können durch den Projektor 4 Bilder erzeugt werden, welche von einem Betrachter 5 (Fahrzeugfahrer) als virtuelle Bilder auf der von ihm abgewandten Seite der Verbundscheibe 10 wahrgenommen werden, wenn sich seine Augen innerhalb der sogenannten Eyebox E befinden.

Die Windschutzscheibe 10 ist aufgebaut aus einer Außenscheibe 1 und einer Innenscheibe 2, die über eine thermoplastische Zwischenschicht 3 miteinander verbunden sind. Ihre Unterkante U ist nach unten in Richtung des Motors des Personenkraftwagens angeordnet, ihre Oberkante O nach oben in Richtung des Dachs. Die Außenscheibe 1 ist in Einbaulage der äußeren Umgebung zugewandt, die Innenscheibe 2 dem Fahrzeuginnenraum.

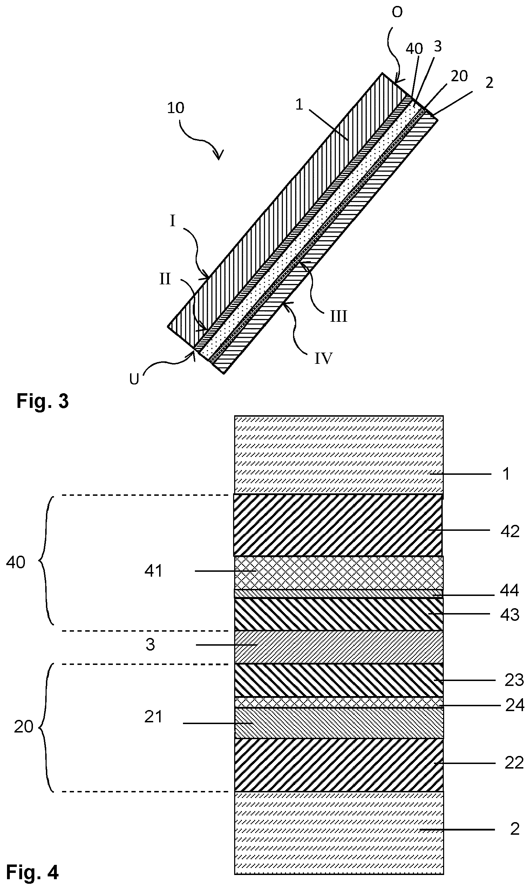

Fig. 3 zeigt eine Ausgestaltung einer erfindungsgemäß ausgebildeten Windschutzscheibe 10. Die Außenscheibe 1 weist eine Außenseite I auf, die in Einbaulage der äußeren Umgebung zugewandt ist, und eine Innenseite II, die in Einbaulage dem Innenraum zugewandt ist. Ebenso weist die Innenscheibe 2 eine Außenseite III auf, die in Einbaulage der äußeren Umgebung zugewandt ist, und eine Innenseite IV, die in Einbaulage dem Innenraum zugewandt ist. Die Außenscheibe 1 und die Innenscheibe 2 bestehen beispielsweise aus Kalk-Natron-Glas. Die Außenscheibe 1 weist beispielsweise eine Dicke von 2,1 mm auf, die Innenscheibe 2 eine Dicke von 1,6 mm oder 2,1 mm. Die Zwischenschicht 3 ist beispielsweise aus einer PVB-Folie ausgebildet mit einer Dicke von 0,76 mm. Die PVB-Folie weist eine im Wesentlichen konstante Dicke auf, abgesehen von einer etwaigen fachüblichen Oberflächenrauigkeit - sie ist nicht als sogenannte Keilfolie ausgebildet.

Die außenseitige Oberfläche III der Innenscheibe 2 ist mit einer Reflexionsbeschichtung 20 versehen, die als Reflexionsfläche für die Projektorstrahlung (und eventuell zusätzlich als IR-reflektierende Beschichtung) vorgesehen ist.

Die Strahlung des Projektors 4 ist p-polarisiert, insbesondere im Wesentlichen rein p-polarisiert. Da der Projektor 4 die Windschutzscheibe 10 mit einem Einfallswinkel von etwa 65° bestrahlt, der nahe dem Brewster-Winkel liegt, wird die Strahlung des Projektors nur unwesentlich an den externen Oberflächen I, IV der Verbundscheibe 10 reflektiert. Die erfindungsgemäße Reflexionsbeschichtung 20 dagegen ist auf die Reflexion p-polarisierter Strahlung optimiert. Sie dient als Reflexionsfläche für die Strahlung des Projektors 4 zur Erzeugung der HUD-Projektion.

Auf der Innenseite II der Außenscheibe 1 ist eine Funktionsbeschichtung 40 angeordnet. Die Funktionsbeschichtung 40 ist für die Reflexion von Infrarot (IR)-Strahlung optimiert und dient zur Verbesserung der Wärmeschutzfunktion der Windschutzscheibe. Die Anordnung auf der Innenseite II der Außenscheibe 1 sorgt dafür, dass der Hauptteil der p-polarisierten Strahlung des Projektors 4 bereits von der Reflexionsbeschichtung 20 auf der Innenscheibe reflektiert wird und zur Erzeugung der HUD-Projektion genutzt werden kann. Somit werden störende Doppelbilder durch die Funktionsbeschichtung 40 weitgehend vermieden.

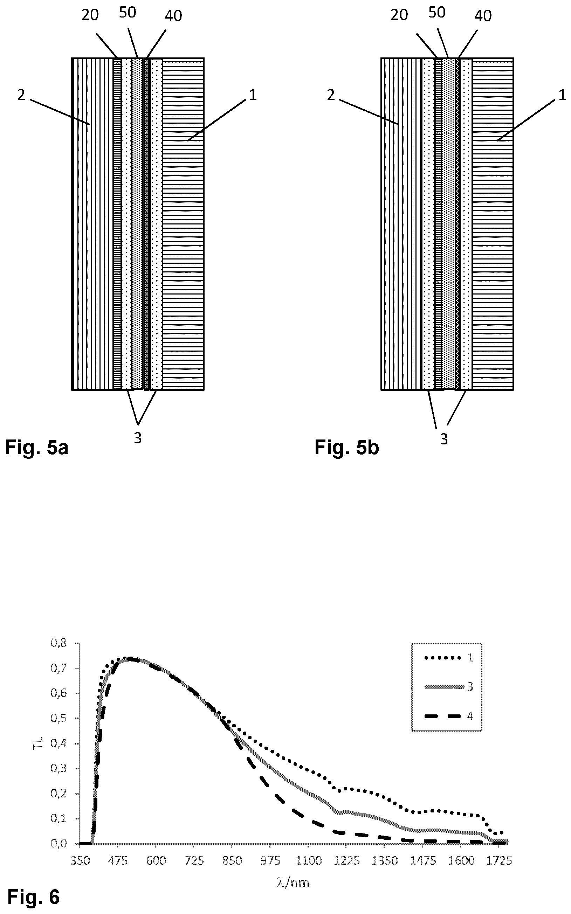

Fig. 5a und Fig. 5b zeigen jeweils einen Querschnitt durch eine Windschutzscheibe mit polymerer Trägerfolie. Figur 5a zeigt eine Windschutzscheibe mit einer Reflexionsbeschichtung 20 auf der Außenseite der Innenscheibe 2. Die Reflexionsbeschichtung 20 ist direkt über ein PVD-Verfahren, in diesem Fall über Magnetronsputtern, auf die Innenscheibe 2 aufgebracht. Die Funktionsbeschichtung 40 ist auf einer polymeren Trägerfolie 50 aus PET angeordnet und in der thermoplastischen Zwischenschicht 3 bestehend aus zwei Lagen aus PVB eingebettet. Da die Reflexionsbeschichtung 20 unmittelbar auf der Innenscheibe 2 angeordnet ist, stört keine Trägerfolie oder thermoplastische Zwischenschicht die Erzeugung des HUD-Bildes.

Bei der in Fig. 5b gezeigten Ausführungsform sind die Funktionsbeschichtung 40 und die Reflexionsbeschichtung 20 auf einer einzigen Trägerfolie 50 angeordnet. Somit muss beim Laminieren nur eine zusätzliche Trägerfolie eingelegt werden, was verfahrenstechnisch von Vorteil ist. Der Abstand zwischen der Reflexionsbeschichtung 20 und der Funktionsbeschichtung 40 wird hier nur durch die Trägerfolie 50 vorgegeben. Somit wird die Erzeugung von störenden Geisterbildern durch die Funktionsbeschichtung 40 besonders effizient vermieden, weil sich eventuelle Reflexionen an der Funktionsbeschichtung mit denen an der Reflexionsbeschichtung überlagern und zu einem Bild werden. Somit werden eventuelle Reflexionen an der Funktionsbeschichtung bei der Erzeugung eines HUD-Bildes nicht als störendes Doppelbild wahrgenommen.

Fig. 4 zeigt die Schichtenfolge einer Ausgestaltung einer Windschutzscheibe 10. Auf der Außenseite der Innenscheibe 2 ist die Reflexionsbeschichtung 20 angeordnet in Form eines Stapels von Dünnschichten. Die Reflexionsbeschichtung 20 umfasst eine elektrisch leitfähige Schicht 21 auf Basis von Silber. Direkt oberhalb der elektrisch leitfähigen Schicht 21 ist eine metallische Blockerschicht 24 angeordnet. Darüber ist ein oberer dielektrischer Schichtaufbau 23 angeordnet. Unterhalb der elektrisch leitfähigen Schicht 21 ist ein unterer dielektrischer Schichtaufbau 22 angeordnet.

Auf der Innenseite der Außenscheibe 1 ist eine Funktionsbeschichtung 40 angeordnet in Form eines Stapels von Dünnschichten. Die Funktionsbeschichtung 40 umfasst eine elektrisch leitfähige Schicht 41 auf Basis von Silber. Direkt oberhalb der elektrisch leitfähigen Schicht 41 ist eine metallische Blockerschicht 44 angeordnet. Darüber ist ein oberstes dielektrisches Schichtmodul 43 angeordnet. Unterhalb der elektrisch leitfähigen Schicht 41 ist ein unterstes dielektrisches Schichtmodul 42 angeordnet.

Die Innenscheibe 2 und die Außenscheibe 1 sind über eine thermoplastische Zwischenschicht 3 verbunden.

Die dargestellten Schichtdicken sind nicht maßstabsgerecht. So ist zum Beispiel die Dicke der Scheiben 1 und 2 und die Dicke der thermoplastischen Zwischenschicht 3 viel zu klein im Vergleich der zu den Dünnschichten dargestellt. Der dargestellte Aufbau ist zudem lediglich beispielhaft zu versehen. So können die Blockerschichten vorhanden sein oder nicht sowie ober- und / oder unterhalb der elektrisch leitfähigen Schichten angeordnet sein. Die dielektrischen Schichtaufbauten und Schichtmodule können jeweils eine einzige dielektrische Schicht oder auch mehrere Schichten umfassen, solange mindestens eine dielektrische Schicht oberhalb und unterhalb der leitfähigen Schichten 21 und 41 vorhanden ist. Beispielhafte Materialien und Schichtdicken können den nachfolgenden Beispielen entnommen werden.

Die Schichtenfolgen einer Windschutzscheibe 10 mit einer Reflexionsbeschichtung 20 auf der Außenseite der Innenscheibe und einer Funktionsbeschichtung 40 auf der Innenseite der Außenscheibe gemäß der erfindungsgemäßen Beispiele 1 bis 6 sind, zusammen mit den Materialien und geometrische Schichtdicken der Einzelschichten, in Tabellen 1 und 2 dargestellt. Die dielektrischen Schichten können unabhängig voneinander dotiert sein, beispielsweise mit Bor oder Aluminium.

**Tabelle 1**

| Material | | | Schichtdicke | | |
|---|---|---|---|---|---|
| | | Beispiel 4 | Beispiel 3 | Beispiel 2 | Beispiel 1 |
| Kalk-Natron-Glas | | 2,1 mm | 2,1 mm | 2,1 mm | 2,1 mm |
| SiN | unterstes diel. Schichtmodul | 25 nm | 25 nm | 25 nm | 20 nm |
| SiZrN | | 10 nm | 10 nm | 10 nm | 10 nm |
| ZnO | | 10 nm | 10 nm | 10 nm | 10 nm |
| Ag | 1. Silberschicht | 8 nm | 8 nm | 11 nm | 10 nm |
| NiCr | Blocker | 0,3 nm | 0,3 nm | 0,3 nm | 0,3 nm |
| ZnO | Mittleres diel. Schichtmodul | 10 nm | 10 nm | | |
| SiN | | 70 nm | 70 nm | | |
| ZnO | | 10 nm | 10 nm | | |
| Ag | 2. Silberschicht | 9 nm | 8 nm | | |
| NiCr | Blocker | 0,3 nm | 0,3 nm | | |
| ZnO | Mittleres diel. Schichtmodul | 10 nm | | | |
| SiN | | 70 nm | | | |
| ZnO | | 10 nm | | | |
| Ag | 3. Silberschicht | 8 nm | | | |
| NiCr | Blocker | 0,3 nm | | | |
| ZnO | Oberstes diel. Schichtmodul | 10 nm | 10 nm | 10 nm | 10 nm |
| SiZrN | | 10 nm | 10 nm | 10 nm | 10 nm |
| SiN | | 25 nm | 20 nm | 25 nm | 25 nm |
| PVB | | 0,76 mm | 0,76 mm | 0,76 mm | 0,76 mm |
| SiN | Oberer diel. Schichtaufbau | 30 nm | 30 nm | 30 nm | 40 nm |
| SiZrN | | 10 nm | 10 nm | 10 nm | 10 nm |
| ZnO | | 10 nm | 10 nm | 10 nm | 10 nm |
| NiCr | Blocker | 0,3 nm | 0,3 nm | 0,3 nm | 0,3 nm |
| Ag | Silber | 11,0 nm | 12 nm | 12 nm | 12 nm |
| ZnO | Unterer diel. Schichtaufbau | 10,0 nm | 10 nm | 10 nm | 10 nm |
| SiN | | 20 nm | 20 nm | 20 nm | 27 nm |
| Kalk-Natron-Glas | | 2,1 mm | 2,1 mm | 2,1 mm | 2,1 mm |

**Tabelle 2**

| Material | | Schichtdicke | | |
|---|---|---|---|---|
| | | Beispiel 5 | Beispiel 6 | Vergleich |
| Kalk-Natron-Glas | | 2,1 mm | 2,1 mm | 2,1 mm |
| SiN | unterstes diel. Schichtmodul | 40 nm | 20 nm | |
| SiZrN | | 10 nm | 10 nm | |
| ZnO | | 10 nm | 10 nm | |
| Ag | 1. Silberschicht | 10 nm | 10 nm | |
| NiCr | Blocker | 0,3 nm | 0,3 nm | |
| ZnO | Oberstes diel. Schichtmodul | 10 nm | 10 nm | |
| SiZrN | | 10 nm | 10 nm | |
| SiN | | 30 nm | 45 nm | |
| PVB | | 0,76 mm | 0,76 mm | 0,76 mm |
| SiN | Oberer diel. Schichtaufbau | 30 nm | 30 nm | 40 nm |
| SiZrN | | 10 nm | 10 nm | 10 nm |
| ZnO | | 10 nm | 10 nm | 10 nm |
| NiCr | Blocker | 0,3 nm | 0,3 nm | 0,3 nm |
| Ag | Silber | 12 nm | 12 nm | 12 nm |
| ZnO | Unterer diel. Schichtaufbau | 10,0 nm | 10 nm | 10 nm |
| SiN | | 20 nm | 20 nm | 27 nm |
| Kalk-Natron-Glas | | 2,1 mm | 2,1 mm | 2,1 mm |

Die optischen Dicken der oberen und unteren Schichtaufbauten und ihr Verhältnis sind in Tabelle 3 zusammengefasst. Das Verhältnis Φ beschreibt das Verhältnis der optischen Dicke des oberen dielektrischen Schichtaufbaus 23 zur optischen Dicke des unteren dielektrischen Schichtaufbaus 22.

Die optische Dicke ergibt sich jeweils als Produkt aus der in den Tabellen 1 und 2 dargestellten geometrischen Dicke und dem Brechungsindex (SiN: 2,0; SiZrN: 2,2, ZnO: 2,0).

**Tabelle 3**

| | optische Dicke des oberen dielektrischen Schichtaufbaus | optische Dicke des unteren dielektrischen Schichtaufbaus | Verhältnis Φ |
|---|---|---|---|
| Beispiel 1 | 122 | 74 | 1,65 |
| Beispiel 2 | 102 | 60 | 1,70 |
| Beispiel 3 | 102 | 60 | 1,70 |
| Beispiel 4 | 102 | 60 | 1,70 |
| Beispiel 5 | 102 | 60 | 1,70 |
| Beispiel 6 | 102 | 60 | 1,70 |
| Vergleichsbeispiel | 122 | 74 | 1,65 |

Die optischen Dicken der obersten und untersten Schichtmodule und ihr Verhältnis sind in Tabelle 4 zusammengefasst. Das Verhältnis γ beschreibt das Verhältnis der optischen Dicke des obersten dielektrischen Schichtmoduls 43 zur optischen Dicke des untersten dielektrischen Schichtmoduls 42.

**Tabelle 4**

| | optische Dicke des obersten dielektrischen Schichtmoduls | optische Dicke des untersten dielektrischen Schichtmoduls | Verhältnis γ |
|---|---|---|---|
| Beispiel 1 | 92 | 82 | 1,12 |
| Beispiel 2 | 92 | 92 | 1,00 |
| Beispiel 3 | 82 | 92 | 0,89 |
| Beispiel 4 | 92 | 92 | 1,00 |
| Beispiel 5 | 122 | 102 | 0,84 |
| Beispiel 6 | 82 | 132 | 1,61 |
| Vergleichsbeispiel | 0 | 0 | 0 |

Die optischen Dicken der obersten, mittleren und untersten Schichtmodule und ihr Verhältnis sind in Tabelle 5 zusammengefasst. Das Verhältnis η1 beschreibt das Verhältnis der optischen Dicke des mittleren dielektrischen Schichtmoduls zur optischen Dicke des obersten dielektrischen Schichtmoduls. Das Verhältnis η2 beschreibt das Verhältnis der optischen Dicke des mittleren dielektrischen Schichtmoduls zur optischen Dicke des untersten dielektrischen Schichtmoduls 42.

**Tabelle 5**

| | optische Dicke des obersten dielektrischen Schichtmoduls | optische Dicke des untersten dielektrischen Schichtmoduls | Optische Dicke des mittleren dielektrischen Schichtmoduls | Verhältnis η 1 | Verhältnis η η 2 |
|---|---|---|---|---|---|
| Beispiel 3 | 82 | 92 | 180 | 1,96 | 1,96 |
| Beispiel 4 unteres Modul | 92 | 92 | 180 | 2,20 | 1,96 |

In Tabelle 6 sind die Werte für die Transmission gemäß Lichtart A angegeben. Zudem die Werte für den thermischen Komfort in Form des TTS-Werts. Dieser gibt die insgesamt eingestrahlte Sonnenenergie wieder und wird gemessen nach ISO 13837.

**Tabelle 6**

| | Transmission TL A / % | TTS / % |
|---|---|---|
| Beispiel 1 | 71 | 54,0 |
| Beispiel 2 | 71 | 52,3 |
| Beispiel 3 | 72 | 51,5 |
| Beispiel 4 | 71 | 49,1 |
| Beispiel 5 | 70 | 53,0 |
| Beispiel 6 | 69 | 52,8 |
| Vergleichsbeispiel | 76 | 61,3 |

Das in Tabelle 2 aufgeführte Vergleichsbeispiel unterscheidet sich von den Beispielen dadurch, dass die Windschutzscheibe keine Funktionsbeschichtung aufweist. Die Windschutzscheibe hat dank der Reflexionsbeschichtung auf der Innenscheibe zwar gute Reflexionseigenschaften für die HUD-Bilderzeugung. Allerdings hat die Scheibe des Vergleichsbeispiels schlechte wärmeisolierende Eigenschaften, wie der hohe TTS-Wert zeigt. Die Beispiele 1 und 3 zeigen im Vergleich zum Vergleichsbeispiel einen deutlich erniedrigten TTS-Wert und haben somit eine verbesserte Wärmeschutzwirkung. Dank der erfindungsgemäßen Reflexionsbeschichtung zur Reflexion p-polarisierter Strahlung eignen sich die erfindungsgemäßen Windschutzscheiben hervorragend zum Einsatz in einer HUD-Projektionsanordnung.

Die Beispiele 1 bis 6 eignen sich alle als Projektionsfläche für die HUD-Bilderzeugung mit p-polarisierter Strahlung.

Alle Beispiele 1 bis 6 weisen ein Verhältnis Φ von mindestens 1,6 auf. Dadurch wird eine farbneutrale Darstellung der HUD-Projektion gewährleistet.

Beispiele 5 und 6 unterscheiden sich von den Beispielen 1 und 2 in erster Linie durch das Verhältnis γ der optischen Dicken des obersten dielektrischen Schichtmoduls zur optischen Dicke des untersten dielektrischen Schichtmoduls. Während der Wert für die Beispiele 1 und 2 zwischen 0,9 und 1,1 liegt, liegt der für Beispiele 5 und 6 darunter bzw. darüber. Dies führt für Beispiele 1 und 2 überaschenderweise zu verbesserten Transmissions-Werten von 71.

Figur 6 zeigt drei Transmissionsspektren zu den Beispielen 1, 3 und 4, deren Aufbau in Tabelle 1 aufgeführt ist. Die Spektren wurden unter identischen Bedingungen aufgenommen, sodass ein direkter Vergleich möglich ist. Man sieht, dass alle Beispiele 1, 3 und 4 im sichtbaren (VIS) Spektralbereich (400 nm bis 800 nm) eine sehr ähnliche Transmission aufweisen. Wie in Tabelle 6 aufgeführt, haben alle Beispiele 1, 3 und 4 einen TL-Wert gemäß Lichtart A von mindestens 70%. Diese eignen sich somit gut als Windschutzscheibe oder als vordere Seitenscheibe im Automobilbereich.

Die Verglasung nach Beispiel 4 zeigt die beste Wärmeschutzwirkung, wie der niedrige TTS-Wert (Tabelle 6) und die niedrige Transmission im Infrarot (IR)-Bereich (800 nm - 2500 nm) zeigt.

Wie ein Vergleich der Spektren in Figur 6 zeigt, sinkt der TL-Wert mit der steigenden Zahl der Silberschichten in der Funktionsbeschichtung. Trotzdem kann eine hohe Transmission im sichtbaren Spektralbereich erreicht werden, sodass ein Einsatz als Windschutzscheibe möglich ist. Tabelle 5 zeigt die Werte für die Verhältnisse η1 und η2, die das Verhältnis der optischen Dicke des mittleren dielektrischen Schichtmoduls zur optischen Dicke des obersten bzw. untersten dielektrischen Schichtmoduls angeben. Die mittleren dielektrischen Schichtmodule haben dabei eine wesentlich größere optische Dicke als die untersten bzw. obersten Schichtmodule. Es hat sich überraschend gezeigt, dass dieses Verhältnis zu vergleichsweise hohen TL-Werten führt, obwohl der Schichtenstapel der Funktionsbeschichtung mehrere Silberschichten umfasst.

### Bezugszeichenliste:

- 1: Außenscheibe
- 2: Innenscheibe
- 3: thermoplastische Zwischenschicht
- 4: Projektor
- 5: Betrachter / Fahrzeugfahrer
- 10: Windschutzscheibe
- 20: Reflexionsbeschichtung
- 21: elektrisch leitfähige Schicht auf Basis von Silber in der Reflexionsbeschichtung
- 22: unterer dielektrischer Schichtaufbau in der Reflexionsbeschichtung
- 23: oberer dielektrischer Schichtaufbau in der Reflexionsbeschichtung
- 24: Blockerschicht
- 40: Funktionsbeschichtung
- 41: elektrisch leitfähige Schicht auf Basis von Silber in der Funktionsbeschichtung
- 42: unterstes dielektrisches Schichtmodul
- 43: oberstes dielektrisches Schichtmodul
- 44: metallische Blockerschicht
- 50: polymere Trägerfolie

- O: Oberkante der Windschutzscheibe 10
- U: Unterkante der Windschutzscheibe 10
- B: HUD-Bereich der Windschutzscheibe 10
- E: Eyebox

- I: außenseitige, von der Zwischenschicht 3 abgewandte Oberfläche der Außenscheibe 1, Außenseite der Außenscheibe 1
- II: innenraumseitige, zur Zwischenschicht 3 hingewandte Oberfläche der Außenscheibe 1, Innenseite der Außenscheibe 1
- III: außenseitige, zur Zwischenschicht 3 hingewandte Oberfläche der Innenscheibe 2, Außenseite der Innenscheibe 2
- IV: innenraumseitige, von der Zwischenschicht 3 abgewandte Oberfläche der Innenscheibe 2, Innenseite der Innenscheibe 2

## Patentansprüche

1. Projektionsanordnung für ein Head-Up-Display (HUD), umfassend
- eine Windschutzscheibe (10), umfassend eine Außenscheibe (1) und eine Innenscheibe (2), die über eine thermoplastische Zwischenschicht (3) miteinander verbunden sind, mit einem HUD-Bereich (B);
- einen Projektor (4), der auf den HUD-Bereich (B) gerichtet ist; wobei die Strahlung des Projektors (4) überwiegend p-polarisiert ist;
- eine Reflexionsbeschichtung (20), die geeignet ist, p-polarisierte Strahlung zu reflektieren, wobei die Reflexionsbeschichtung (20) genau eine elektrisch leitfähige Schicht (21) auf Basis von Silber enthält, unterhalb der elektrisch leitfähigen Schicht (21) einen unteren dielektrischen Schichtaufbau (22) umfasst, dessen Brechungsindex mindestens 1,9 beträgt, und oberhalb der elektrisch leitfähigen Schicht (21) einen oberen dielektrischen Schichtaufbau (23) umfasst, dessen Brechungsindex mindestens 1,9 beträgt, wobei alle dielektrischen Schichten der Reflexionsbeschichtung (20) einen Brechungsindex von mindestens 1,9 haben,
wobei Brechungsindizes bei einer Wellenlänge von 550 nm mittels Ellipsometrie bestimmt werden;
- eine Funktionsbeschichtung (40), die geeignet ist, IR-Strahlung zu reflektieren, wobei
- die Funktionsbeschichtung (40) und die Reflexionsbeschichtung (20) zwischen der Innenscheibe (2) und der Außenscheibe (1) angeordnet sind, wobei die Reflexionsbeschichtung (20) zwischen Innenscheibe (2) und Funktionsbeschichtung (40) angeordnet ist,
wobei
i) die Reflexionsbeschichtung (20) auf der zur thermoplastischen Zwischenschicht (3) weisenden Außenseite (III) der Innenscheibe (2) angeordnet ist, und bevorzugt durch physikalische Gasphasenabscheidung aufgebracht ist, oder
ii) die Funktionsbeschichtung (40) und die Reflexionsbeschichtung (20) auf einer einzigen polymeren Trägerfolie (50) angeordnet sind, wobei die polymere Trägerfolie (50) in die thermoplastische Zwischenschicht (3) eingebettet ist, oder
iii) die Funktionsbeschichtung (40) in Form einer mehrschichtigen polymeren Folie ohne elektrisch leitfähige Schichten ausgeführt ist.

2. Projektionsanordnung nach Anspruch 1, wobei in der Reflexionsbeschichtung (20) das Verhältnis der optischen Dicke des oberen dielektrischen Schichtaufbaus (23) zur optischen Dicke des unteren dielektrischen Schichtaufbaus (22) mindestens 1,6 beträgt, bevorzugt mindestens 1,7 beträgt, besonders bevorzugt mindestens 1,8 beträgt.

3. Projektionsanordnung nach Anspruch 1 oder 2, Variante i) oder ii), wobei die Funktionsbeschichtung (40) mindestens eine elektrisch leitfähige Schicht (41) auf Basis von Silber enthält, deren geometrische Dicke kleiner ist als die geometrische Dicke der elektrisch leitfähigen Schicht (21) auf Basis von Silber in der Reflexionsbeschichtung,
- die Funktionsbeschichtung unterhalb der elektrisch leitfähigen Schicht (41) auf Basis von Silber ein unterstes dielektrisches Schichtmodul (42) umfasst, dessen Brechungsindex mindestens 1,9 beträgt, und
- die Funktionsbeschichtung (40) oberhalb der elektrisch leitfähigen Schicht (41) auf Basis von Silber ein oberstes dielektrisches Schichtmodul (43) umfasst, dessen Brechungsindex mindestens 1,9 beträgt,
wobei Brechungsindizes bei einer Wellenlänge von 550 nm mittels Ellipsometrie bestimmt werden.

4. Projektionsanordnung nach Anspruch 3, wobei in der Funktionsbeschichtung (40) das Verhältnis der optischen Dicke des obersten dielektrischen Schichtmoduls (43) zur optischen Dicke des untersten dielektrischen Schichtmoduls (42) zwischen 0,8 und 1,5 beträgt, bevorzugt zwischen 0,9 und 1,2, besonders bevorzugt etwa 1,0 beträgt.

5. Projektionsanordnung nach einem der Ansprüche 1 bis 4, Variante i) oder ii), wobei die Funktionsbeschichtung (40) zwei elektrisch leitfähige Schichten auf Basis von Silber (41) und dazwischen ein mittleres dielektrisches Schichtmodul enthält, wobei die geometrische Dicke aller elektrisch leitfähigen Schichten auf Basis von Silber (41) in der Funktionsbeschichtung (40) kleiner ist als die geometrische Dicke der elektrisch leitfähigen Schicht auf Basis von Silber (21) in der Reflexionsbeschichtung (20).

6. Projektionsanordnung nach Anspruch 5, wobei in der Funktionsbeschichtung (40) das Verhältnis der optischen Dicke des mittleren dielektrischen Schichtmoduls zu der optischen Dicke des untersten dielektrischen Schichtmoduls (42) und zu der optischen Dicke des obersten dielektrischen Schichtmoduls größer als 1,9, bevorzugt größer als 2,0 besonders bevorzugt größer als 2,1 ist.

7. Projektionsanordnung nach einem der Ansprüche 1 bis 6, Variante i) oder ii), wobei die Funktionsbeschichtung (40) auf der zur thermoplastischen Zwischenschicht (3) weisenden Innenseite (II) der Außenscheibe (1) angeordnet ist, und bevorzugt durch physikalische Gasphasenabscheidung aufgebracht ist.

8. Projektionsanordnung nach einem der Ansprüche 1 bis 7, Variante i) oder ii), wobei in der Reflexionsbeschichtung (20)
- der untere Schichtaufbau (22) eine erste untere dielektrische Schicht, bevorzugt auf Basis von Siliziumnitrid, und eine zweite untere dielektrische Schicht, bevorzugt auf Basis von Zinkoxid, mit einem Brechungsindex von mindestens 1,9 umfasst und/oder
- der obere Schichtaufbau (23) eine erste obere dielektrische Schicht, bevorzugt auf Basis von Siliziumnitrid, und eine zweite obere dielektrische Schicht, bevorzugt auf Basis von Zinkoxid, mit einem Brechungsindex von mindestens 1,9 umfasst,
wobei Brechungsindizes bei einer Wellenlänge von 550 nm mittels Ellipsometrie bestimmt werden.

9. Projektionsanordnung nach einem der Ansprüche 1 bis 8, Variante i) oder ii), wobei die Reflexionsbeschichtung (20) und die Funktionsbeschichtung (40) jeweils mindestens eine metallische Blockerschicht (24) umfassen, die oberhalb und/oder unterhalb mindestens einer elektrisch leitfähigen Schicht (21, 41) angeordnet ist und eine geometrische Dicke von weniger als 1 nm aufweist.

10. Projektionsanordnung nach einem der Ansprüche 1 bis 9, Variante i) oder ii), wobei in der Reflexionsbeschichtung (20) die elektrisch leitfähige Schicht (21) eine geometrische Dicke von 10 nm bis 14 nm aufweist.

11. Projektionsanordnung nach einem der Ansprüche 1 bis 10, Variante i) oder ii), wobei die Funktionsbeschichtung (40) über elektrische Sammelleiter mit einer Spannungsquelle verbunden ist und durch Anlegen einer Spannung beheizbar ist.

12. Projektionsanordnung nach einem der Ansprüche 1 bis 11, wobei die Strahlung des Projektors (4) im Wesentlichen rein p-polarisiert ist und mit einem Einfallswinkel von 60° bis 70° auf die Windschutzscheibe (10) trifft.

## Claims

1. Projection assembly for a head-up display (HUD), comprising
- a windshield (10), comprising an outer pane (1) and an inner pane (2) that are joined to one another via a thermoplastic intermediate layer (3), with an HUD region (B);
- a projector (4), which is directed at the HUD region (B); wherein the radiation of the projector (4) is predominantly p-polarized;
- a reflection coating (20) that is suitable for reflecting p-polarized radiation, wherein
the reflection coating (20) contains exactly one electrically conductive layer (21) based on silver,
the reflection coating (20) below the electrically conductive layer (21) comprises a lower dielectric layer structure (22) with a refractive index of at least 1.9,
the reflection coating (20) above the electrically conductive layer (21) comprises an upper dielectric layer structure (23) with a refractive index of at least 1.9, wherein all dielectric layers of the reflection coating (20) have a refractive index of at least 1.9, wherein the refractive indices are determined by ellipsometry at a wavelength of 550 nm,
- a functional coating (40) that is suitable for reflecting IR radiation, wherein
- the functional coating (40) and the reflection coating (20) are arranged between the inner pane (2) and the outer pane (1), wherein the reflection coating (20) is arranged between the inner pane (2) and the functional coating (40),
wherein
i) the reflection coating (20) is arranged on the outer face (III) of the inner pane (2) facing the thermoplastic intermediate layer (3) and is preferably applied by physical vapor deposition, or
ii) the functional coating (40) and the reflection coating (20) are arranged on a single polymeric carrier film (50), wherein the polymeric carrier film (50) is embedded in the thermoplastic intermediate layer (3), or
iii) wherein the functional coating (40) is implemented in the form of a multilayer polymeric film without electrically conductive layers.

2. Projection assembly according to claim 1, wherein in the reflection coating (20), the ratio of the optical thickness of the upper dielectric layer structure (23) to the optical thickness of the lower dielectric layer structure (22) is at least 1.6, preferably at least 1.7, particularly preferably at least 1.8.

3. Projection assembly according to claim 1 or 2, variant i) or ii), wherein the functional coating (40) contains at least one electrically conductive layer (41) based on silver, with a geometric thickness smaller than the geometric thickness of the electrically conductive layer (21) based on silver in the reflection coating,
- the functional coating below the electrically conductive layer (41) based on silver includes a lowest dielectric layer module (42) with a refractive index of at least 1.9, and
- the functional coating (40) above the electrically conductive layer (41) based on silver includes an uppermost dielectric layer module (43) with a refractive index of at least 1.9, wherein the refractive indices are determined by ellipsometry at a wavelength of 550 nm.

4. Projection assembly according to claim 3, wherein in the functional coating (40), the ratio of the optical thickness of the uppermost dielectric layer module (43) to the optical thickness of the lowest dielectric layer module (42) is between 0.8 and 1.5, preferably between 0.9 and 1.2, particularly preferably about 1.0.

5. Projection assembly according to one of claims 1 through 4, variant i) or ii), wherein the functional coating (40) contains two electrically conductive layers based on silver (41) and a middle dielectric layer module therebetween, wherein the geometric thickness of all electrically conductive layers based on silver (41) in the functional coating (40) is smaller than the geometric thickness of the electrically conductive layer based on silver (21) in the reflection coating (20).

6. Projection assembly according to claim 5, wherein in the functional coating (40), the ratio of the optical thickness of the middle dielectric layer module to the optical thickness of the lowest dielectric layer module (42) and to the optical thickness of the uppermost dielectric layer module is greater than 1.9, preferably greater than 2.0, particularly preferably greater than 2.1.

7. Projection assembly according to one of claims 1 through 6, variant i) or ii), wherein the functional coating (40) is arranged on the inner face (II) of the outer pane (1) facing the thermoplastic intermediate layer (3) and is preferably applied by physical vapor deposition.

8. Projection assembly according to one of claims 1 through 7, variant i) or ii), wherein in the reflection coating (20)
- the lower layer structure (22) comprises a first lower dielectric layer, preferably based on silicon nitride, and a second lower dielectric layer, preferably based on zinc oxide, with a refractive index of at least 1.9, and/or
- the upper layer structure (23) comprises a first upper dielectric layer, preferably based on silicon nitride, and a second upper dielectric layer, preferably based on zinc oxide, with a refractive index of at least 1.9,
wherein the refractive indices are determined by ellipsometry at a wavelength of 550 nm.

9. Projection assembly according to one of claims 1 through 8, variant i) or ii), wherein the reflection coating (20) and the functional coating (40) include in each case at least one metallic blocking layer (24), which is arranged above and/or below at least one electrically conductive layer (21, 41) and has a geometric thickness of less than 1 nm.

10. Projection assembly according to one of claims 1 through 9, variant i) or ii), wherein in the reflection coating (20), the electrically conductive layer (21) has a geometric thickness of 10 nm to 14 nm.

11. Projection assembly according to one of claims 1 through 10, variant i) or ii), wherein the functional coating (40) is connected to a voltage source via electrical bus bars and can be heated by applying a voltage.

12. Projection assembly according to one of claims 1 through 11, wherein the radiation of the projector (4) is substantially purely p-polarized and strikes the windshield (10) at an angle of incidence of 60° to 70°.

## Revendications

1. Ensemble de projection pour un affichage tête haute (HUD), comprenant
- un pare-brise (10), comprenant une vitre extérieure (1) et une vitre intérieure (2) qui sont reliées l'une à l'autre par une couche intermédiaire thermoplastique (3), avec une zone HUD (B);
- un projecteur (4), orienté vers la zone HUD (B); le rayonnement du projecteur (4) étant principalement polarisé p;
- un revêtement réfléchissant (20) adapté à la réflexion d'un rayonnement polarisé p, dans lequel
le revêtement réfléchissant (20) contient exactement une couche électriquement conductrice (21) à base d'argent,
le revêtement réfléchissant (20) situé sous la couche électriquement conductrice (21) comprend une structure de couches diélectriques inférieures (22) présentant un indice de réfraction d'au moins 1,9,
le revêtement réfléchissant (20) situé au-dessus de la couche électriquement conductrice (21) comprend une structure de couches diélectriques supérieures (23) présentant un indice de réfraction d'au moins 1,9, toutes les couches diélectriques du revêtement réfléchissant (20) ayant un indice de réfraction d'au moins 1,9, les indices de réfraction étant déterminés par ellipsométrie à une longueur d'onde de 550 nm,
- un revêtement fonctionnel (40) adapté à la réflexion du rayonnement infrarouge, dans lequel
- le revêtement fonctionnel (40) et le revêtement réfléchissant (20) sont disposés entre la vitre intérieure (2) et la vitre extérieure (1), le revêtement réfléchissant (20) étant disposé entre la vitre intérieure (2) et le revêtement fonctionnel (40),
dans lequel
i) le revêtement réfléchissant (20) est disposé sur la face extérieure (III) de la vitre intérieure (2) tournée vers la couche intermédiaire thermoplastique (3) et est de préférence appliqué par dépôt physique en phase vapeur, ou
ii) le revêtement fonctionnel (40) et le revêtement réfléchissant (20) sont disposés sur un seul film support polymère (50), le film support polymère (50) étant noyé dans la couche intermédiaire thermoplastique (3), ou
iii) le revêtement fonctionnel (40) se présentant sous la forme d'un film polymère multi-couche sans couches électriquement conductrices.

2. Ensemble de projection selon la revendication 1, dans lequel, dans le revêtement réfléchissant (20), le rapport entre l'épaisseur optique de la structure de couches diélectriques supérieures (23) et l'épaisseur optique de la structure de couches diélectriques inférieures (22) est d'au moins 1,6, de préférence d'au moins 1,7, et de manière particulièrement préférée d'au moins 1,8.

3. Ensemble de projection selon la revendication 1 ou 2, variante i) ou ii), dans lequel le revêtement fonctionnel (40) contient au moins une couche électriquement conductrice (41) à base d'argent, dont l'épaisseur géométrique est inférieure à l'épaisseur géométrique de la couche électriquement conductrice (21) à base d'argent dans le revêtement réfléchissant,
- le revêtement fonctionnel situé sous la couche électriquement conductrice (41) à base d'argent comprend un module de couche diélectrique inférieur (42) présentant un indice de réfraction d'au moins 1,9, et
- le revêtement fonctionnel (40) situé au-dessus de la couche électriquement conductrice (41) à base d'argent comprend un module de couche diélectrique le plus supérieur (43) présentant un indice de réfraction d'au moins 1,9,
les indices de réfraction étant déterminés par ellipsométrie à une longueur d'onde de 550 nm.

4. Ensemble de projection selon la revendication 3, dans lequel, dans le revêtement fonctionnel (40), le rapport entre l'épaisseur optique du module de couche diélectrique le plus supérieur (43) et l'épaisseur optique du module de couche diélectrique inférieur (42) est compris entre 0,8 et 1,5, de préférence entre 0,9 et 1,2, et de manière particulièrement préférée autour de 1,0.

5. Ensemble de projection selon l'une des revendications 1 à 4, variante i) ou ii), dans lequel le revêtement fonctionnel (40) contient deux couches électriquement conductrices à base d'argent (41) et un module de couche diélectrique intermédiaire entre celles-ci, dans lequel l'épaisseur géométrique de toutes les couches électriquement conductrices à base d'argent (41) dans le revêtement fonctionnel (40) est inférieure à l'épaisseur géométrique de la couche électriquement conductrice à base d'argent (21) dans le revêtement réfléchissant (20).

6. Ensemble de projection selon la revendication 5, dans lequel, dans le revêtement fonctionnel (40), le rapport entre l'épaisseur optique du module de couche diélectrique intermédiaire et l'épaisseur optique du module de couche diélectrique inférieur (42) ainsi que l'épaisseur optique du module de couche diélectrique le plus haut est supérieur à 1,9, de préférence supérieur à 2,0, et de manière particulièrement préférée supérieur à 2,1.

7. Ensemble de projection selon l'une des revendications 1 à 6, variante i) ou ii), dans lequel le revêtement fonctionnel (40) est disposé sur la face interne (II) de la vitre extérieure (1) tournée vers la couche intermédiaire thermoplastique (3) et est de préférence appliqué par dépôt physique en phase vapeur.

8. Ensemble de projection selon l'une des revendications 1 à 7, variante i) ou ii), dans lequel, dans le revêtement réfléchissant (20)
- la structure de couches diélectriques inférieures (22) comprend une première couche diélectrique inférieure, de préférence à base de nitrure de silicium, et une deuxième couche diélectrique inférieure, de préférence à base d'oxyde de zinc, présentant un indice de réfraction d'au moins 1,9, et/ou
- la structure de couches diélectriques supérieures (23) comprend une première couche diélectrique supérieure, de préférence à base de nitrure de silicium, et une deuxième couche diélectrique supérieure, de préférence à base d'oxyde de zinc, présentant un indice de réfraction d'au moins 1,9,
les indices de réfraction étant déterminés par ellipsométrie à une longueur d'onde de 550 nm.

9. Ensemble de projection selon l'une des revendications 1 à 8, variante i) ou ii), dans lequel le revêtement réfléchissant (20) et le revêtement fonctionnel (40) comprennent chacun au moins une couche de blocage métallique (24), qui est disposée au-dessus et/ou au-dessous d'au moins une couche électriquement conductrice (21, 41) et présente une épaisseur géométrique inférieure à 1 nm.

10. Ensemble de projection selon l'une des revendications 1 à 9, variante i) ou ii), dans lequel, dans le revêtement réfléchissant (20), la couche électriquement conductrice (21) présente une épaisseur géométrique comprise entre 10 nm et 14 nm.

11. Ensemble de projection selon l'une des revendications 1 à 10, variante i) ou ii), dans lequel le revêtement fonctionnel (40) est relié à une source de tension par l'intermédiaire de barres omnibus électriques et peut être chauffé par application d'une tension.

12. Ensemble de projection selon l'une des revendications 1 à 11, dans lequel le rayonnement du projecteur (4) est sensiblement purement polarisé p et frappe le pare-brise (10) sous un angle d'incidence compris entre 60° et 70°.
